Europäisches Patentamt

European Patent Office

Office européen des brevets

(11) Publication number: **0 229 669**
**A2**

## EUROPEAN PATENT APPLICATION

(21) Application number: 87100456.0

(22) Date of filing: 15.01.87

(51) Int. Cl.⁴: **G 05 D 1/03**
**B 62 D 1/28**

(30) Priority: 17.01.86 US 820551

(43) Date of publication of application:
22.07.87 Bulletin 87/30

(84) Designated Contracting States:
AT BE CH DE ES FR GB GR IT LI LU NL SE

(71) Applicant: Litton Industrial Automation Systems, Inc.
280 East Riley Street
Zeeland Michigan 49464 (US)

(72) Inventor: Schultz, Warner J.
1893 Pinecroft S.W.
Wyoming Michigan 49509 (US)

Young, Ernest L.
2241 Glen Echo S.E.
Grand Rapids Michigan 49506 (US)

(74) Representative: Patentanwälte Schaumburg & Thoenes
Mauerkircherstrasse 31 Postfach 86 07 48
D-8000 München 80 (DE)

(54) Integrated wire/surface guidance system.

(57) An integrated wire/surface guidance system (100) is disclosed wherein automatically guided vehicles (102) are made to follow a predetermined guidance layout (122). The guidance layout (122) comprises guidewire segments (130) forming wire loops buried beneath the floor surface (124). The guidance layout (122) also includes surface guidepath segments (144), and each of the vehicles (102) includes a surface guidepath sensor arrangement (190) and a buried wire sensor arrangement (172) for detecting the position of the vehicle (102) relative to the surface and buried wire path segments (144, 130), respectively. A control system (170) mounted on the vehicle (102) selectively controls activation of the sensor arrangements (190, 172) and is responsive to sensing signals received from the sensor arrangements so as to control steering and movement along either type of segment, in addition to selectively switching detection control between the same.

Figure 2

EP 0 229 669 A2

## Description

## Integrated Wire/Surface Guidance System

### Technical Field

The invention relates to automated guidance systems and, more particularly, relates to guidance systems comprising automatically guided vehicles controllable so as to follow a predetermined guidance layout.

### Background Art

Guidance systems have heretofore been commercially developed whereby automatically guided vehicles (AGV's) effectively "track" a predetermined guidance layout. Exemplary guidance systems employed in such vehicles are disclosed in the following United States patents: Cooper, et al 3,935,922 issued February 3, 1976; DeBruine 3,970,840 issued July 20, 1976; and DeBruine 4,307,791 issued December 29, 1981. The vehicles disclosed in these patents, and the guidance layouts associated therewith, can be employed within industrial and commercial organizations for uses such as floor maintenance, mail delivery, material handling and similar functions.

Early systems adapted for automatic control of driverless vehicles employed "track" vehicles and fixed rails or tracks, whereby the vehicles would mechanically be made to follow the physical contour of the track. In view of the requisite installation and physical presence of the rails or tracks, the disadvantages of such systems are relatively obvious. Also, such systems are substantially unacceptable for functions such as floor maintenance and operations requiring movement between different floor levels, etc. In recent years, the systems have often been limited to uses as automatic storage/retrieval systems, such as lift trucks which move on tracks among tiered storage racks for storage or retrieval of material under automated control.

With the relatively rapid technological development in electrical and electronic technologies during the past several decades, systems for guidance of driverless vehicles have been developed whereby the vehicles are made to follow a guidance layout by the sensing of electromagnetic signals indicative of the relative positioning between a vehicle and the path of the guidance layout. For example, guidance systems employing buried wires located beneath a floor surface have been applied successfully to various types of factory-related functions, such as movement of automatic parts on assembly lines and other types of material handling systems. In systems employing buried wires, the wires are typically buried in a floor in a manner so as to define the particular path which a vehicle is to follow. The wires are conductive and typically excited by wire driver circuitry which generate alternating currents at pre-determined frequencies. The guidewire may be positioned in a routed floor groove at an appropriate depth, with the wire sealed with epoxy or similar material.

The guidewire can then be energized by wire driver circuitry comprising frequency generators having alternating currents of relatively low frequencies and low amplitudes. The vehicles can be equipped with sensing circuitry capable of detecting the magnetic fields generated by the alternating currents in the guide-wires. The sensing circuitry can, for example, comprise a pair of wire coils positioned in a manner so that coil voltages are generated as a result of the non-stationary magnetic fields passing through the coils.

With the coils appropriately positioned in a symetrical manner on the vehicle, signals indicative of the difference between the magnitudes of the individual coil voltages, or the difference between a coil voltage and a reference voltage, can be utilized to drive a vehicle's steering mechanism so that the vehicle is appropriately steered to follow the path defined by the buried wire. Alternating currents of different frequencies can be generated on different wire segments of a guidance layout comprising multiple wire paths. The vehicle can then be made to switch between paths by selective detection of magnetic fields pulsating at particular frequencies. Buried wire guidance systems are disclosed in the following United States patents: DeLiban, et al 4,284,160 issued August 18, 1981; and Taylor 4,307,329 issued December 22, 1981. Numerous other patents also disclose concepts associated with buried wire systems.

Buried wire guidance systems are advantageous in that they are substantially tolerant of dirt or debris, and therefore have a relatively low cleaning maintenance cost. Similarly, such buried wire systems are substantially tolerant of relatively heavy traffic moving over the guidance layout. In addition, the buried wire paths provide a relatively effective means to control vehicle movement when such vehicles are located within industrial or similar environments whereby the vehicles must traverse relatively large continuous loops.

However, several disadvantages also exist with respect to guidance layouts comprising buried wire paths. For example, it can be somewhat expensive and difficult to construct a buried wire path system within an existing structure. To apply a buried wire path to an existing floor structure, it is necessary to cut a groove in the floor structure along the path the vehicle is to follow, and lay a new floor surface over the wire after it is buried in the groove. Such buried wire paths obviously lack flexibility with respect to the changing of the position of any particular path. In addition, if the guidance layout is to include sidings or other relatively short segments, and especially where the guidance layout comprises a substantial number of such segments, the buried wire path system installation is expensive and time consuming. It can also require a number of wire driver circuits, each operating at a different frequency.

Still further, although the wire material for use in buried wire systems is relatively cheap, the construc tion process can be labor intensive, e.g. cutting of the floor surface with a diamond saw, etc. Also, interference problems can exist when a buried wire system is employed in a floor heavily reinforced with metallic reinforcing rods or similar conductive elements. Still further, because buried wire paths require the flow of electric current, the path segments must be established as "loops", thus requiring a substantial amount of wire material. Failure of the loops can occur as a result of breaks. Moreover, such breaks can be difficult to locate and repair.

Other systems employing driverless vehicles made to follow a predetermined path have utilized materials which are applied in some manner to a floor surface, but do not comprise any substantial physical obstacles such as rails or tracks. The vehicles are again made to follow the paths by the use of signal detection provided by on-board vehicle circuitry.

For example, guidance systems have been developed which can be characterized as "reflected light sensing systems." In such systems, a brightly visible line is applied to the floor surface in a manner so that the line contrasts markedly with the surface, the line providing the predetermined path for the vehicle to follow. The vehicle can include a light source of visible light directed onto the floor surface. Photocell sensors can also be provided on the vehicle so as to detect the level of light reflected from the floor. Such photocell sensors can be electrically connected to differential output amplifiers or similar circuitry in manner similar to circuits associated with the sensing coils of the buried wire path systems. The output signals from the differential output amplifier circuits can be applied to a servo drive mechanism or similar systems so as to steer the vehicle along the guide line as the vehicle moves along the floor surface.

Surface guidepaths are often employed in office environments, and function to provide operations such as automated mail delivery and the like. The concept of applying the guidepath to a floor surface has several advantages. For example, such a surface guidepath can typically be applied to the floor with relatively low installation costs, and can also be changed relatively rapidly and inexpensively. Accordingly, such a surface guidepath can be extremely cost effective where industrial production processes change in a manner so as to require relatively frequent modification to the guidepath. In addition, spurs, sidings or similar types of relatively short path segments which may be associated with areas such as pick-up/drop-off stations can be implemented in a relatively efficient manner. Still further, since the surface guidepath does not require any type of "power" applied to the guidepath, such as the requisite current generation associated with the buried wire path system, the length of the surface guidepath does not have any substantial limitations.

Disadvantages associated with reflected light sensing systems employing surface guidepath also exist. One of the particular problems associated with the reflected light system is that background or spurious illumination from the floor is received by the photocell sensors, in addition to illumination resulting from the light originally directed to the guideline by the vehicle light source. This background illumination impairs the ability of the system to detect the contrast between the guide line and the floor surface. With surfaces having differing contrast levels, such as a tiled surface employing multi-colored tiles, accurate tracking with a reflected light system is substantially unreliable.

Indeed, reflected light guidance systems have also been known to cause a vehicle to follow a beam of sunlight cast across a floor surface from a window. Such unreliability is a critical defect in automated machine vehicles because such machines thus require constant supervision (thus eliminating labor cost savings), and an unmanned machine out of control on a spurious or non-existent line can be substantially hazardous. In addition, the impermanence and visibility of a guide line in a reflected light sensing system includes its own drawbacks. For example, a visible and removable guide line invites vandalism, and such guide lines are aesthetically unappealing, although visibility is sometimes desirable in the interests of safety and decreasing the possibility of obstacles blocking the vehicles. Aesthetic unacceptability can be fatal to the use of a reflected light systems in several applications, including floor care industry applications. That is, it is substantially unacceptable to almost any operation to have a complex matrix of highly visible lines criss-crossing on a floor surface, solely for the purpose that a floor scrubber or floor sweeper could be operated automatically.

Another problem associated with reflected light sensing systems relates to their limitations of use only on hard and relatively flat surfaces, such as concrete or tile. Problems associated with obtaining requisite reflectance levels, and with the aesthetic undesirability of a solid, bright visible line on a carpet can prevent the application of such a system in any such environment.

A substantial advance in the state of the art related to guidance systems for unmanned vehicles was achieved with the development of a guidepath layout that can be characterized as a "chemical guidepath." A vehicle guidance system employing a chemical guidepath was initially disclosed and claimed in the previously-referenced Cooper, et al patent. Cooper, et al discloses a chemical guidepath comprising an "invisible" guide line containing fluorescent material. The Cooper, et al guidance mechanism also includes automatically guided vehicles having ultraviolet lamps which cause the chemical guidepath to fluoresce and emit visible light. Photocell sensors are mounted on the vehicle and sense the visible light radiation so as to produce error signals proportional to the variations of vehicle positions from predetermined lateral positions relative to the lines of the chemical guidepaths. Steering control mechanisms also associated with the vehicles are adapted to steer the vehicles in response to the error signals so as to appropriately follow the guide line. Cooper, et al also discloses control circuitry adapted to provide automatic contrast so as to eliminate potential deleterious effects of background illumination.

The chemical guidepath arrangement substantially provides all of the advantages associated with other surface guidepath systems, such as the previously described reflected light sensing systems. That is, the chemical guidepath can be applied to a floor surface relatively quickly with low installation costs, and can also be modified relatively rapidly. In addition, a chemical guidepath lends itself to the employment of code markers or similar elements position adjacent to the guidepath and capable of detection by the photocell sensors. Such code markers can be utilized for purposes of providing system control information from the floor surface. For example, as disclosed in U.S. Patent No. 4,379,497, issued April 12, 1983, such code markers can be utilized to indicate to vehicle control circuitry that the vehicle is approaching an intersection of a guidepath.

In addition to the foregoing advantages, the chemical guidepath also has several advantages over other types of surface guidepath systems. For example, guidance systems employing chemical guidepaths provide the capability of following a line that is invisible under ordinary ambient lighting conditions, and only becomes visible upon stimulation by the radiation generated by the guidance system itself. Accordingly the flexibility and relatively low expense of a reflected light system are achieved, while simultaneously overcoming the long recognized problems associated with the visibility of a reflective line. Also, because the radiation source produces stimulating radiation in the non-visible spectrum, and the sensors are responsive primarily to radiation in the visible frequency range, the chemical guidepath system reduces substantially the adverse effect caused by reflection of source radiation from background surfaces. Accordingly, the chemical guidepath system is substantially more reliable than a reflected light system.

Still further, chemical guidepath systems are particularly adaptable to vehicle guidance applications and environments such as "clean room" installations. Also, the chemical guidepath provides no aesthetic disadvantages in view of its invisibility under ambient conditions. Furthermore, such chemical guidepaths are particularly suited to employment with floor surfaces other than concrete, tile, or other hard and flat surfaces. Other advantages associated with the chemical guidepath will be readily apparent to those skilled in the art of guidance system design.

The chemical guidepath, however, also has several disadvantages associated with other surface guidepath systems. For example, surface guidepaths are substantially vulnerable to conditions which may cover and obscure the guidepath from sensing circuitry on the vehicles.

As described in the foregoing, both buried wire guidance system technology and surface guidance system technology include advantages and disadvantages associated with construction, maintenance and functional operations. Several of the problems associated with one or the other types of the systems will exist only with respect to particular applications. However, in other applications, especially those involving complex and sophisticated industrial and commercial environments, neither one of the particular individual systems will eliminate all disadvantages, or provide a system having the advantages of both buried wire and surface guidepath technologies.

Summary of the Invention

In accordance with the invention, a guidance layout forming a predetermined path is adapted for use in a vehicle guidance system wherein at least one self-propelled vehicle is adapted to follow the guidance layout. The guidance layout includes wire guidepath means located in a predetermined disposition relative to a floor surface so as to provide at least one segment of the layout as a conductive path segment. Source means are provided to generate electrical path signals and apply the signals to the wire guidepath means, and surface guidepath means are located in a predetermined disposition relative to the surface to provide at least one segment of the layout capable of detection by the vehicle in the absence of electrical current passing through the guidepath means.

The layout can also include code means located proximate the floor surface and detectable by the vehicle to indicate the location of the vehicle along the guidance layout, or to indicate particular functions to be performed by the vehicle. The layout further includes central system controller means to selectively transmit controller information signals to the vehicle, with the signals representative of a sequence of functions to be performed. The central system controller means can include means to transmit and receive infrared communication signals.

The wire guidepath means can include a plurality of buried wires located beneath the floor surface. The electrical path signals include alternating current signals transmitted through the buried wires.

The surface guidepath means can include surface guidepath segments located proximate to the floor surface and having a color or other appearance sufficiently contrasting with adjacent portions of the surface so as to be capable of detection by the vehicle. In addition, the surface guidepath means can also include guidepath segments located on the floor surface and capable of emitting electromagnetic signals in a first predetermined range, in response to the application of signals in a second predetermined range from the vehicle.

In accordance with another aspect of the invention, a vehicle is adapted for use in a vehicle guidance system and adapted to follow a predetermined guidance layout. The vehicle includes first sensing means to detect electrical signals flowing through at least one first segment of the guidance layout, and to generate first signals representative of the position of the vehicle relative to the first segment. Vehicle control means are connected to the first sensing means, and are responsive to the first signals to generate first steering control signals. The vehicle also includes steering control means connected to the vehicle control means, and responsive to the first steering control signals to steer the vehicle in a manner so as to guide it relative to the first segment. Second sensing means for detecting at least one second segment of the guidance layout by detecting electromagnetic signals emitted from the second segment are also provided, with the second sensing means also generating second signals representative of the position of the vehicle relative to the second segment. Vehicle control means are connected to the second sensing means and responsive to the second sensing signals to generate the second steering control signals. The steering control means are also further responsive to the second steering control signals to guide the vehicle as it moves along the second segment.

The vehicle can also include operator interface means responsive to manual operation to generate address destination signals representative of a guidance layout destination location to which the vehicle is to travel. The vehicle control means is responsive to the address destination signals to store the signals, and to determine path segments of the layout from a present location of the vehicle to the destination location. In addition, the vehicle control means generates steering and traction control signals so as to follow the path segments during travel to the destination location.

The vehicle control means can include means for generating status signals representative of various status parameters of the vehicle. The operator interface means is responsive to the status signals to indicate to an operator the various status parameters of the vehicle. The vehicle can also include vehicle communication means responsive to externally-applied controller information signals representative of a sequence of functions to be performed by the vehicle. In addition, externally-applied vehicle communication signals are generated representative of the controller information signals. The vehicle control means is responsive to the externally-applied vehicle communication signals to execute the sequence of functions.

The vehicle control means can also include means to generate status communication signals representative of various status parameters associated with the vehicle. The vehicle communication means are responsive to the status communication signals to transmit a set of internally-generated vehicle communication signals representative of the vehicle status parameters.

The first sensing means can include sensor coil means mounted to the vehicle to sense magnetic fields generated from the guidance layout. Sensor coil voltage signals are induced within the sensor coil means as a result of the magnetic fields. Circuit means are connected to the sensor coil means to compare the sensor coil voltage signals and to generate the first signals in accordance with the comparison. The circuit means include means for selectively filtering the sensor coil voltage signals so as to generate the first signals representative of a comparison only of sensor coil voltage signals having predetermined frequencies.

The circuit means can also include filter means responsive to the sensor coil voltage signals and to signals generated by the vehicle control means to filter out portions of the sensor coil voltage signals other than voltage signals having predetermined frequencies. In addition, the filter means are adapted to generate filtered sensor coil voltage signals indicative thereof. Comparison means are provided to compare the filtered sensor coil voltage signals and to generate an analog signal representative of the comparison. Converter means are provided to convert the analog signals to the first signals. In addition, the circuit means can also include signal detection means to detect the presence or absence of the filtered sensor coil voltage signals.

The vehicle can also include a pivotable steering and traction wheel. In addition, the second sensing means can include illumination means to generate electromagnetic light waves and apply the light waves to areas surrounding the second segment of the guidance layout. Scanning means are provided to periodically scan the guidance layout and to detect electromagnetic light waves emitted from the guidance layout in response to illumination of the layout by the illumination means. Circuit means are included and are responsive to the visible electromagnetic light waves to convert the light waves into corresponding electrical signals and generate the second signals.

The circuit means can include means to convert the corresponding electrical analog signals into corresponding digital signals. Surface guidepath processor means are responsive to the corresponding digital signals to generate the second signals, and clock and timing means are provided to synchronize operation of the circuit means and the scanning means.

The surface guidepath processor means can include means to transmit and receive signals for synchronizing operation of the scanning means. In addition, the means for transmitting and receiving signals can also receive data signals representative of data sense points about the second segment. Means are provided which are responsive to the data signals to determine line characteristics of the second segment for purposes of guiding the vehicle along the segment. Means are also provided which are responsive to the line characteristics to generate the second signals.

The vehicle can also include steering control means which comprise traction control means connected to the vehicle control means. The steering control means are responsive to traction control signals generated by the vehicle control means to selectively control the speed of the vehicle. The vehicle communication means can include means to transmit and receive infrared communication signals.

The vehicle communication means can also include filter means to filter the externally-applied vehicle communication signals, and to generate filtered signals representative thereof. Demodulator means are connected to the filter means and are responsive to the filtered signals for converting the signals into a serial data stream. The serial data stream includes a first logic level corresponding to externally-applied vehicle communication signals having a first frequency, and a second logic level corresponding to the externally-applied vehicle communication signals having a second frequency. Modulator means are provided which are connected to the vehicle communication means and are responsive to the status communication signals to convert the signals into data signals formatted for infrared transmission.

The vehicle control means can include a digital computer. In addition, the control means can include means for receiving destination address signals representative of a destination location of the layout to which the vehicle is to travel, and for storing in memory the destination address signals. Means can also be provided to receive the first signals and the second signals, and means can be further provided which are responsive to the first and second signals to generate the steering control signals so as to control traversal of the layout and the speed of the vehicle.

The vehicle control means can include means for storing information signals representative of the map of the layout. Means can also be provided to detect the existence of the destination address signals, and means can further be provided which are responsive to signals indicative of the present location of the vehicle to determine if the travel of the vehicle to the destination location requires the vehicle to switch between following of the first segment and following of the second segment. Means selectively apply signals to the first sensing means and to the second sensing means so as to selectively follow either the first or second segment. In addition, means are provided which are responsive to signals received from the second sensing means so as to determine when the vehicle has arrived at the destination location. Means are further responsive to this determination to apply signals to the steering control means so as to stop the vehicle.

In accordance with another aspect of the invention, a guidance system includes a predetermined guidance layout and at least one self-propelled vehicle adapted to follow the guidance layout. The layout includes wire guidepath means located in a predetermined disposition relative to a floor surface to provide at least one segment of the guidance layout as a conductive path segment. Source means are provided to generate electrical path signals and apply the signals to the wire guidepath means. In addition, surface guidepath means are located in a predetermined disposition relative to the floor surface to provide at least one segment of the layout capable of detection by the vehicle in the absence of electrical current passing through the guidepath means.

The vehicle includes first sensing means mounted on the vehicle to detect the electrical path signals when the vehicle is following the wire guidepath means, and to generate first signals representative of the lateral position of the vehicle relative to the wire guidepath means. Vehicle control means are connected to the first sensing means and mounted on the vehicle, and are responsive to the first signals to generate first steering control signals. Steering control means are connected to the vehicle control means and mounted on the vehicle, and are responsive to the first steering control signals to steer the vehicle in a manner so as to guide it relative to the wire guidepath means.

Second sensing means are mounted on the vehicle to detect the surface guidepath means, and to generate second signals representative of the lateral position of the vehicle relative to the surface guidepath means. The vehicle control means is connected to the second sensing means and responsive to the second signals to generate second steering control signals. The steering control means is further responsive to the second steering control signals so as to guide the vehicle as it moves along the surface guidepath means.

The wire guidepath means can include at least one wire loop located beneath the floor surface to provide at least one segment of the guidance layout below the floor surface. The surface guidepath means can include at least one relatively flat guidepath located on the floor surface to provide at least one segment of the guidance layout on the floor surface.

The guidance layout can also include code means located on the floor surface and detectable by the vehicle for indicating the location of the vehicle along the layout or for indicating particular functions to be performed by the vehicle. The second sensing means can be responsive to detection of the code means indicative of the vehicle approaching a potential switching loca tion between the wire guidepath means and the surface guidepath means to generate potential path switching signals. The control means is responsive to the potential path switching signals to selectively follow either the surface guidepath means or the wire guidepath means.

The guidance system can also include central system controller means to selectively transmit to the vehicle controller information signals representative of a sequence of functions to be performed by the vehicle. The vehicle can also include vehicle communication means responsive to the controller information signals to generate externally-applied vehicle communication signals representative of the controller information signals. The vehicle control means are responsive to the externally-applied vehicle communications signals to execute the sequence of functions.

The vehicle control means can include means to generate status communication signals representative of various status parameters associated with the vehicle. The vehicle communication means are responsive to the status communication signals to transmit to the central system controller means a set of internally-generated vehicle communication signals representative of the status parameters.

The wire guidepath means can include at least one buried wire located beneath the floor surface. The electrical path signals include alternating current signals transmitted through the buried wire. The first sensing means can include sensor coil means mounted to the vehicle to sense magnetic fields resulting from currents passing through the buried wire. Sensor coil voltage signals are induced within the coil means as a result of the fields. Circuit means are connected to the sensor coil means to compare the voltage signals and to generate the first signals in accordance with the comparison.

The vehicle control means can further include means to receive destination address signals representative of a destination location of the layout to which the vehicle is to travel, and for storing in memory the destination address signals. Means are provided to receive the first and second signals, and means are also provided which are responsive to the first and second signals to generate the steering control signals so as to control traversal of the layout and speed of the vehicle.

The vehicle control means can include means for storing information signals representative of a map of the layout, and also include means for detecting the existence of destination address signals. Means are responsive to signals generated by the second sensing means indicative of the detection of the code means for determining a present location of the vehicle, and means are also provided which are responsive to signals indicative of the present location of the vehicle to determine if travel of the vehicle to the destination location requires the vehicle to switch between following of the surface guidepath means and the wire guidepath means. Means are further provided to selectively apply signals to the first sensing means and the second sensing means so as to selectively follow either the surface guidepath means or wire guidepath means. In addition, means are responsive to signals received from the second sensing means to determine when the vehicle has arrived at the destination location, and means are responsive to the determination to apply signals to the steering control means so as to stop the vehicle.

A method in accordance with the invention includes generating and applying electrical path signals to a wire guidepath located at a predetermined position relative to a floor surface. Electrical path signals are detected when the vehicle is following the wire guidepath. First signals are generated which are representative of the vehicle position relative to the wire guidepath. First steering control signals are generated which are responsive to the first signals.

The vehicle is steered in response to the first steering control signals in a manner so as to guide the vehicle along the wire guidepath. In addition, a surface guidepath is sensed and second signals are generated representative of the position of the vehicle relative to the surface guidepath. Second steering control signals are generated in response to the second signals, and the vehicle is guided along the surface guidepath in response to the second steering control signals as the vehicle moves along the guidepath.

Potential path switching signals are generated which indicate the vehicle is approaching a potential switching location between the wire guidepath and the surface guidepath. The vehicle selectively follows either the surface guidepath or the wire guidepath in response to the potential path switching signals.

The method also includes providing code indications along the guidance layout to indicate the location of the vehicle. The potential path switching signals are generated in response to detection of the codes located along the surface guidepath indicating that the vehicle is approaching the potential switching location.

Brief Description of the Drawings

The invention will now be described with reference to the drawings in which:

Figure 1 is a perspective view of an automatically guided vehicle (AGV) operable in a guidance system in accordance with the invention;

Figure 2 depicts an integrated wire/surface guidance system in accordance with the invention, and includes an exemplary path layout for the guidewire segments and surface guidepath of the system;

Figure 3 is a block diagram of one illustrative embodiment of an on-board guidance control system operable on the vehicle depicted in Figure 1, and further showing the interface of the control system to buried wire segments, the surface guidepath and a central guidance system controller;

Figure 4 is a structural and schematic block diagram of the on-board guidance control system schematically shown in Figure 3, and further showing the structural relationships of various elements of the control system to the floor surface and mechanical elements of the vehicle;

Figure 5 is a schematic block diagram of one illustrative embodiment of a vehicle communications circuit employing infrared (IR) technology for purposes of spatial communication between the on-board guidance control system and the central system controller depicted in Figure 3;

Figure 6 is a schematic block diagram of one illustrative embodiment of a microprocessor module which could be utilized in the vehicle control microcomputer of the guidance control system depicted in Figure 3;

Figure 7 is a schematic block diagram of one illustrative embodiment of the vehicle control microcomputer utilized in the guidance control system depicted in Figure 3;

Figure 8 is a schematic block diagram of one illustrative embodiment of the guidewire sensor arrangement shown in Figure 3, and further showing interface of the sensor arrangement to a buried wire segment and the vehicle control microcomputer;

Figure 9 is a schematic block diagram of one illustrative embodiment of the guidepath sensor arrangement of the guidance control system depicted in Figure 3 and further showing interface of the guidepath sensor arrangement to the surface guidepath and the vehicle control microcomputer;

Figure 10 depicts a sequence diagram illustrating a real-time operational sequence capable of execution in the vehicle control microcomputer to provide an overall operating sequence for the guidance system;

Figure 11 depicts a sequence diagram showing an illustrative sequence of functions capable of execution in the vehicle control microcomputer and relating to vehicle routing operations; and,

Figure 12 depicts a sequence diagram showing an illustrative sequence of functional operations relating to the surface guidepath sensor arrangement and capable of execution in the guidepath sensor microprocessor.

Detailed Description

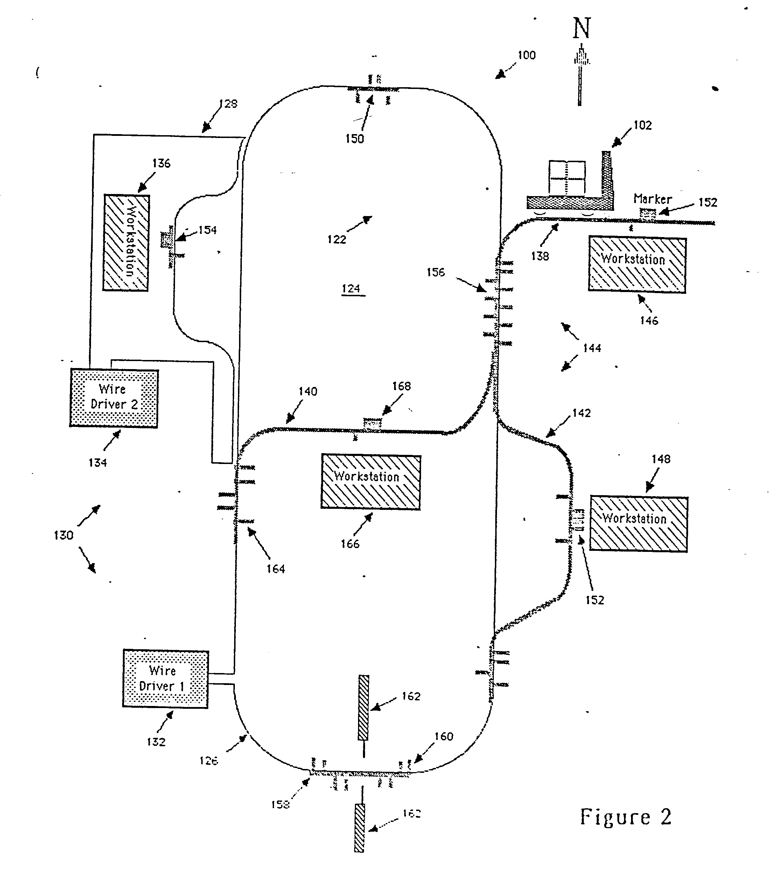

The principles of the invention are disclosed, by way of example, in an integrated wire/surface guidance system 100 as depicted in Figure 2. A system of this type can be utilized for the performance of various types of functions in industrial and commercial establishments, whereby such functions can be advantageously performed through the employment of automatically guided vehicles made to follow a predetermined path layout. For example, functions capable of advantageous performance by such a system can include the transportation of materials and other loads of various sizes and weights between various locations of an industrial plant or similar type of environment. As will be described in detail herein, the integrated guidance system 100 employs the use of a buried wire path system and a surface guidepath system in one path layout in a manner whereby each of the respective systems is employed so as to obtain the distinct advantages of each system, while avoiding the disadvantages of each path system typically associated with particular applications.

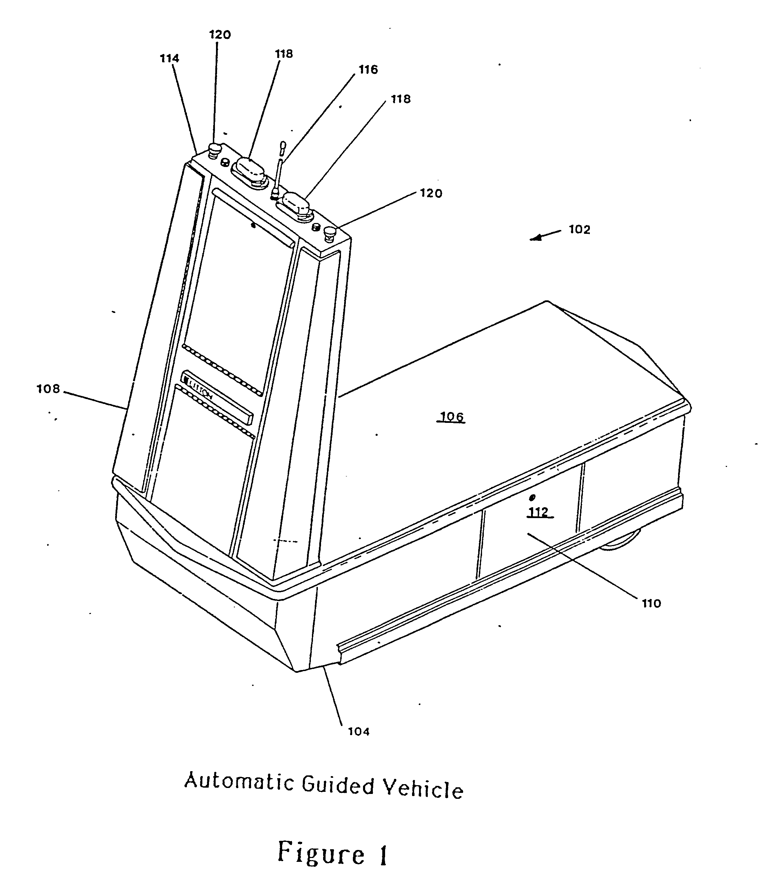

For purposes of performance of the material transport functions, the guidance system 100 can employ a plurality of vehicles such as the automated self-propelled vehicle 102 illustrated in Figure 1. Such vehicles are typically characterized in the materials handling art as "automatically guided vehicles" (AGV's). Referring specifically to the illustrative embodiment of one of the vehicles 102 as shown in Figure 1, the vehicle 102 can include a base 104 having a load carrier 106 mounted thereon for purposes of material transport. A vertically disposed forward shield 108 is positioned at the front portion of the vehicle 102, with the load carrier 106 positioned rearward thereof. The vehicle 102 can be powered by storage batteries (not shown) located in a battery compartment 110 accessible through an access door 112. Various circuitry and mechanical assemblies subsequently described herein, including motor drive units and electronic elements, can be located at appropriate positions within the base 104 and the forward shield 108.

An external control module 114 can be located on the upper portion of the forward shield 108 and can include various elements (not shown) such as a conventional manually programmable keyboard, electronic display screen or similar elements for providing an operator interface for manual control of various functions associated with the vehicle 102. In addition, the vehicle 102 can also include various other types of optional elements. For example, the external control module 114 can include an antenna 116 for providing functions such as transmission of RF signals. The antenna 116 could be employed for purposes of spatial communication with other vehicles 102 for purposes of avoiding collisions at intersections along the guidance system 100. A vehicle collision avoidance system employing such spatial communication for automatically guided vehicles on predetermined guidepaths is disclosed in the U.S. Patent to Hainsworth, et al, 4,379,497 issued April 12, 1983.

The external control module 114 can also include elements such as the caution lights 118 positioned on opposing sides of the module 114. The caution lights 118 can provide a means for visually indicating specific vehicle operations. For example, the particular caution light 118 on the left side of the vehicle 102 can be actuated when the vehicle is turning left onto a new portion of the path layout of the guidance system 100 at an intersection. In addition, the module 114 can also include manually operable activators 120 which can provide various types of functional operations. For example, one of the activators 120 could be employed for providing a means for emergency braking of the vehicle 102 in the event of a breakdown or other type of hazardous condition.

Referring again to Figure 2, the guidance system 100 includes a path layout 122 which can be located at the floor level 124 of an industrial plant of other type of facility as previously described herein. The specific configuration of the layout 122 is dictated at least in part by the particular transport functions to be performed. Accordingly, it should be emphasized that path layout 122 is merely an exemplary configuration, and numerous other structural configurations could be employed in accordance with the invention.

As specifically shown in Figure 2, the path layout 122 can include a plurality of paths comprising, for example, a buried wire path segment 126 and a second buried wire path segment 128, the wire segments collectively indicated by reference number 130. The concept of employing buried wire segments in path layouts for automatically guided vehicles is relatively well known. The guidewire segments can comprise various types of wires which are buried beneath the floor level 124.

For example, the actual wires of the guidewire segments 130 can comprise standard 18 gauge, PVC insulated wire set into a routed groove beneath the floor level 124 at a depth of approximately 15 to 20 mm. For purposes of insulation, the wires can be sealed with epoxy or similar material. A buried guidewire system is described in Taylor, U.S. Patent No. 4,307,329 issued December 22, 1981.

The first buried wire path segment 126 comprises a loop having its two ends terminating at a conventional wire driver circuit 132. Similarly, the second buried wire path segment 128 also forms a loop with terminating ends connected to a second wire driver circuit 134. Each of the wire driver circuits 132, 134 is a conventional circuit comprising a frequency generator for applying to the corresponding buried wire path segment an alternating current at a particular predetermined frequency. The alternating current applied to each of the buried wire path segments will typically be of relatively low frequency (a magnitude on the order of $10^3$ Hz) and relatively low amplitude. For example, the current may be limited to 400 ma RMS. A typical wire driver circuit is described in Automated Guided Vehicles, Dr. - Ing Thomas Muller, IFS (Publications) Ltd., UK (1983), pp. 59-61.

Referring again specifically to Figure 2, the buried wire path segment 126 can be characterized as the "main loop" in the industrial environment and could, for example, be several thousand feet in length. The second buried wire path segment 128 comprises a relatively shorter loop and can be characterized as a "siding" for purposes of guiding the vehicles 102 to the work station 136. The work station 136, like other work stations subsequently described herein associated with the path layout 122, can comprise a pick-up/drop-off station or similar environment at which a particular function associated with the transport operations of the vehicles 102 is performed. The second wire driver circuit 134 will apply an alternating current to the second buried wire path segment 128 at a frequency differing from the frequency of alternating current applied to the main loop buried wire path segment 126 by the wire driver circuit 132. The differential frequencies of the currents generated by the driver circuits 132, 134 provide a means for causing the vehicles 102 to selectively follow one or the other of the wire path segments 126, 128. The circuitry associated with the vehicles 102 to perform the frequency discrimination and resultant switching will be described in subsequent paragraphs herein.

The path layout 122 shown in Figure 2 also includes a plurality of surface guidepath segments 138, 140 and 142, these surface guidepath segments being collectively referenced by numeral 144. The surface guidepaths 144 can comprise any suitable detectible material which can be located on the surface of floor level 124. For purposes of distinguishing the surface guidepaths 144 from the guidewire segments 130 in Figure 2, the surface guidepaths 144 are shown in dotted line format.

The surface guidepaths 144 can comprise brightly visible lines utilized as a reflected light sensing system as earlier described in the section entitled "Background Art." That is, brightly visible lines contrasting markedly with the surface of floor level 124 can be laid along the appropriate portions of the path layout 122 for purposes of guiding the vehicles 102. The vehicles could then include light sources of visible light shining on the floor surfaces, with photocell sensors detecting the level of light reflected from the floor level 124. Reflected light sensing systems are relatively well known in the art of guidance design for automatically guided vehicles.

However, such reflected light sensing systems have several disadvantages as also set forth in the section entitled "Background Art." In a preferred embodiment, the surface guidepath segments 144 can comprise a fluorescent material which can be applied so as to form the appropriate surface portions of the path layout 122. The width of the segments 144 will preferably be on the order of one inch. The surface guidepath segments 144 formed as described herein can be characterized as "chemical" guidepath segments. These chemical guidepath segments 144 can be made virtually invisible under ambient lighting conditions, and can include a suitable amount of fluorescent material so that when the guidepath segment is irradiated by ultra-violet light, the fluorescent material fluoresces so as to emit visible light in a predetermined frequency range. For example, the fluorescent material may radiate visible light in the blue-green spectrum (approximately 450-500 nanometers) when stimulated by invisible ultraviolet radiation at approximately 360 nanometers. The means for sensing the chemical guidepath segments 144 will be described in subsequent paragraphs herein with respect to the specific configurations of the vehicles 102. A suitable fluorescent chemical guidepath system is disclosed and claimed in Cooper, et al, U.S. Patent No. 3,935,922 issued February 3, 1976.

As also shown in Figure 2, the chemical guidepath segment 138 is positioned adjacent a work station 146, while the chemical guidepath segment 142 is positioned adjacent another work station 148. The work stations 146 and 148, in addition to the previously described work station 136, can be utilized as industrial facilities to perform particular work functions associated with the vehicles 102. For example, if the guidance system 100 is employed in a facility associated with an industrial production process, the various work stations can be positions at which the loads transported on the vehicles 102 are loaded or unloaded from the vehicles. In addition, the work stations can also be locations at which particular work is performed on the loads carried by the vehicles 102.

As known in guidance systems employing automatically guided vehicles, it is advantageous to provide automated control of various functions which can be accomplished by the vehicles. For example, it is advantageous to achieve automatic stopping of the vehicles at the work stations where particular functions are to be performed. Also, in sophisticated guidance systems, the path layouts can include multiple path segments. Accordingly, the vehicles must "choose" which of potential alternate paths are to be followed when approaching an "intersection" of the path segments.

Various systems have been heretofore developed to accomplish automated control of such functions. In guidance systems employing surface guidepaths, various "indicators" in the form of markings on the floor surface can be employed. These types of systems also utilize means on the vehicles to "sense" the markings and to provide appropriate signals to control mechanisms on the vehicles indicative of the sensed markings. The vehicle control mechanism can include programmable elements, circuitry and electro-mechanical elements to perform the functions indicated by the markings.

As an example, the path layout 122 shown in Figure 2 can include markings on a floor surface at various locations of the layout 122 to indicate particular functions to be performed. These markings can, for example, be constructed of the same fluorescent material as the chemical guidepath segments 144. As a specific example, the markings can include a series of "spurs" extending perpendicularly to a chemical guidepath segment. Information can be coded within the spurs by designating a spur on the right side of the linear guidepath as corresponding to a binary "1", while left side spurs correspond to a binary "0." Accordingly, a marking code "word" can comprise binary coded information having a predetermined number of digits corresponding to the number of spurs. A code of this type and the manner in which sensor circuits detect the code is described in DeBruine, et al, U.S. Patent No. 4,307,791 issued December 29, 1981.

To illustrate the specific types of functions which can be accomplished utilizing the floor surface markings, the path layout 122 includes a chemical guidepath code 150 located on the floor surface above a portion of the buried wire path segment 126. The chemical guidepath code 150 can comprise a relatively short linear chemical guidepath segment, with a series of "spurs" laterally extending from the linear segment. The particular code indicated by the chemical guidepath code 150 can be sensed by means on the vehicles 102 so as to provide information which can be decoded by the vehicle control system as indicative of a particular floor location or, for example, a particular function to be performed at the path layout location.

The particular means for sensing the chemical guidepath code 150 and other markings as described herein will be generally described in greater detail in subsequent paragraphs herein. As an example of the use of the code 150, the information relating to the position of the vehicle can be employed by a computer memory on the vehicle to update the memory's data with exact vehicle location information. Accordingly, with a guidance system employing a central control of some type, and also employing means for the vehicle to transmit information to the central controller, the vehicle 102 can then transmit data to the vehicle controller relating to the current location of the vehicle. Alternatively, the guidepath code 150 could be utilized as an indicator that the vehicle 102 is to perform a particular function, such as activation of a caution light, activation of an audial mechanism (horn, etc.) or similar function.

Another type of code which can be employed in the path layout 122 is a chemical guidepath marker code 152 shown in Figure 2 as being associated with work stations 146 and 148. The chemical guidepath marker code 152 is unique relative to the "spurs" associated with the chemical guidepath code 150 in that it has a differing width which is capable of being sensed by the sensing mechanisms associated with the vehicles 102. The marker code 152 can be employed, for example, to provide "precision" stopping information for the vehicles 102. As shown in Figure 2, the marker code 152 is located adjacent to the work stations 146 and 148, and can therefore be employed to provide an indication to a vehicle 102 that it is in the appropriate position to pick up or deposit a load at the work station 146 or 148.

As another example of the use of codes, the path layout 122 can also include a chemical guidepath marker 154 positioned adjacent the work station 136 on the buried wire path segment 128 providing a "siding" of the path layout 122. Like the chemical guidepath marker code 152, the marker 154 can provide a precision stopping indicator or a similar indication relating to functions associated with the work station 136.

A still further type of code which can be employed with the path layout 122 the chemical guidepath location code 156 shown between the various segments of the chemical guidepath 144. The location code 156 can be employed by a vehicle 102 at an "intersection" of various segments of the path layout 122 to provide an indication that a decision must be made as to which particular branch of the path layout 122 the vehicle 102 is to follow after exiting from the intersection. For purposes of description, the path layout 122 is spatially referenced with a "north" indicator as shown in Figure 2. As an example of the use of location code 156, if the vehicle were traveling in the north direction and passed over the location code 156, the circuitry of the vehicle 102 can include data indicating whether the vehicle 102 is to follow the chemical guidepath segment 138 or, alternatively, to follow the buried wire path segment 126. It is apparent from Figure 2 that if the vehicle 102 follows the chemical guidepath segment 138, it will enter the area of work station 146 for purposes of performing a particular function, such as loading or unloading of the vehicle 102. It should be emphasized that various means can be employed to provide information as to the particular path which the vehicle 102 is to follow. For example, data indicative of the particular path to be followed can be directly programmed into a computer memory on the vehicle 102 or, alternatively, can be provided through communications to the vehicle 102 from a central controller associated with the guidance system 100. Such a central controller could be maintaining various types of information associated with all of the vehicles 102 on the path layout 122.

As an indication that directional information associated with travel of the vehicle 102 can be important, an analysis of the movement of the vehicle 102 can be made assuming the vehicle is traveling in a south direction and passes over the chemical guidepath location code 156. In this case, a "decision" would have to be made as to whether the vehicle 102 follows chemical guidepath segment 140, chemical guidepath segment 142 or continues directly south on the buried wire path segment 126. Again, information relating to the particular path which the vehicle should follow can be provided through programmable means associated with the vehicle control system.

Another type of operation which can be associated with codes located on the path layout 122 is illustrated by the function code 158. This function code, when "read" by the sensing mechanisms of the vehicle 102, can indicate to the vehicle 102 that, for example, a door on a storage area of the vehicle 102 is to be opened. As an exemplary type of functional operation, when the function code 158 is sensed by the vehicle 102, a relatively low power transmitter can be employed to signal a motor or similar arrangement on the door to cause the door to open. In addition, it is possible for the function code 158 to be employed in a "directional" sense in that if the vehicle 102 is traveling in an opposing direction, sensing of the function code 158 can result in activation of the motor and various circuitry to cause the storage door to be closed.

Similarly, a further function code 160 can be utilized as shown in Figure 2 to provide a code indication to close the door on the vehicle 102, when the vehicle 102 is traveling in a direction whereby the sensing of the function code 158 caused the door to open. Intermediate to function codes 158 and 160, the guidance system 100 can include various types of material handling mechanisms 162 which can perform various types of functions on the vehicle 102 associated with the storage door being open. It should also be noted that the function code 160, when the vehicle is traveling in the opposing direction to that which causes the function code 158 to open the door, can provide an indication that the storage door for the vehicle 102 is to be opened.

As earlier referenced, for functions such as the type described with respect to the function codes 158, 160, the vehicle 102 may include a conventional motor coupled to the storage door so as to provide automatic opening and closing of the door. In addition, if a low power transmitter is utilized to transmit spatial signals to which the motor is responsive, the motor may also include a receiver circuit for purposes of signal detection. In this manner, so long as the transmit signal is detected by the receiver, the door can be held open by the motor. It will be apparent that various other types of similar functional operations can be performed in response to the sensing of codes such as the function codes 158, 160.

Another type of code which can be employed with the guidance system 100 and the path layout 122 is the crossover location code 164. If a vehicle 102 passes over the crossover location code 164 while traveling in a north direction, the code 164 can be detected by the vehicle 102 and the vehicle can be caused to leave the buried wire path segment 126 and follow the "crossover" path comprising the chemical guidepath segment 140. In this manner, the vehicle 102 can be made to pass from one section of the buried wire path segment 126 to another section on the other side of the wire segment 126. It is apparent that the crossover path comprising the chemical guidepath segment 140 can also cause the vehicle 102 to move to another buried wire segment or other portion of the path layout 122. For example, the vehicle 102 could be caused to move to a parking area or similar area where the vehicle 102 can be stopped and its batteries charged or similar maintenance could be performed. For example, the work station 166 shown adjacent the crossover path 140, in combination with the chemical guidepath marker code 168, can be employed to stop the vehicle 102 on the chemical guidepath segment 140 and perform various maintenance functions.

Alternatively, instead of the crossover location code 164 causing the vehicle to follow the crossover chemical guidepath segment 140, the location code 164 could be employed to provide information so as to move the vehicle from the buried wire path segment 126 to the alternate buried path segment 128. Again, it is apparent that a substantial variety of functions can be provided by employment of codes on the floor surface such as those previously described herein.

In accordance with the invention, the path layout 122 of the guidance system 100 comprises a combination of buried wire path segments, chemical guidepath segments and chemical guidepath codes. Also, because the codes are located on a floor surface and can be constructed of materials identical to the previously-described chemical guidepath segments, these codes can also be characterized as part of the overall chemical guidepath segments.

An advantage of guidance systems such as system 100 structured in accordance with the invention is that buried wire segments can be employed where such segments are favorably utilized, while chemical or other surface guidepath segments can be simultaneously utilized where such surface guidepath segments are more favorably employed. The advantages and disadvantages of both buried wire path segments and surface path segments were substantially discussed in the section entitled "Background Art."

For example, the work stations 146, 148 may be relatively "clean" environments, and the likelihood of dirt or other materials obscuring the paths associated with layout 122 may be minimal. Also, the path leading to the work station 148 may preferably be constructed as a "siding" of the "main loop" comprising the buried wire path segment 126. In this manner a vehicle 102 stopped at work station 148 is favorably prevented from interference with the travel of other vehicles 102 on the main loop. It should also again be noted that a "passive" surface guidepath constructed of materials which can be detected by means such as light sources on the vehicles are preferable to buried wire segments in that a complete "loop" of the path need not be formed. For these and other reasons as discussed in the section entitled "Background Art", the path segments of the path layout 122 associated with the work stations 146 and 148 can preferably be constructed as surface guidepaths such as the chemical guidepath segments 138 and 142 shown in Figure 2.

Furthermore, with the crossover guidepath segment 140 having a spatial configuration within the path layout 122 as shown in Figure 2, it is preferable to construct this segment as a surface guidepath element. Otherwise, additional loops and frequency generators would be required with respect to the path configuration formed by the buried wire path segment 126 and the crossover path segment 140.

Still further, with respect to the selection of buried wire path segments or surface path segment within a path layout, it is apparent that the previously described markings must be constructed as surface guidepath segments. Otherwise, a substantially different means of indicating vehicle locations, indicating intersections and providing other functions associated with the vehicles 102 must be utilized. That is, with employment of buried wires, it is not possible for the vehicles 102 to utilize circuitry for "sensing" indicators on the path layout 122.

As also earlier described, however, buried wire path segments can be favorably employed in certain situations. For example, as shown in the path layout 122, a relatively long "main loop" of substantial length can be required in the path layout. This loop configuration is, therefore, provided by the buried wire path segment 126. In addition, the "siding" associated with work station 136 may be an environment comprising a high traffic area where a surface guidepath could possible be "scraped off" or otherwise removed from the floor level 124. Also, the area associated with the work station 136 could be an environment where there is a substantial probability that a surface guidepath would be obscured by dirt, paint or similar materials. Accordingly, for these reasons, the siding associated with the work station 136 is preferably formed by the buried wire path segment 128.

In summary, the path layout 122 of the guidance system 100 as shown in Figure 2 advantageously includes both buried wire path segments and chemical guidepath segments, with the chemical guidepath markers comprising portions of the surface guidepath segments. However, to achieve appropriate functional operation of the guidance system 100, the vehicles 102 must include means for accurately following both buried wire and surface path segments. The following paragraphs primarily relate to the structure and functional operation of the vehicles 102 which provide the capability of utilizing the path layout 122 comprising both buried wire and surface guidepath segments.

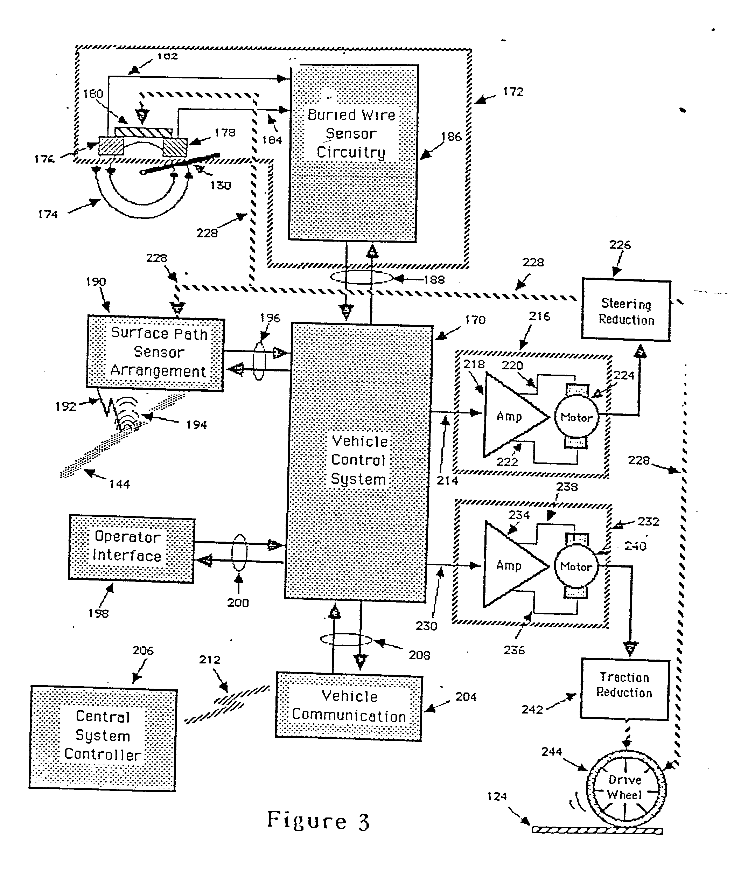

The general electro-mechanical configuration of the assemblies mounted on the vehicles 102 in accordance with the invention is depicted in Figure 3. Referring thereto, each vehicle 102 comprises a vehicle control system 170 which provides means responsive to signals received from sensing systems, operator interface modules and centralized guidance system communication arrangements to perform various functional operations associated with the vehicle, including transmission of guidance signals to steering and traction control units of the vehicle 102. As will be described in greater detail herein, the control system 170 can comprise a microcomputer or comparable programmable and memory storage devices for performance of the vehicle steering guidance functions and other operations. However, it can also be noted that although it would very unlikely be a preferable embodiment, the functions performed by the control system 170 could be executed primarily through the use of analog circuitry.

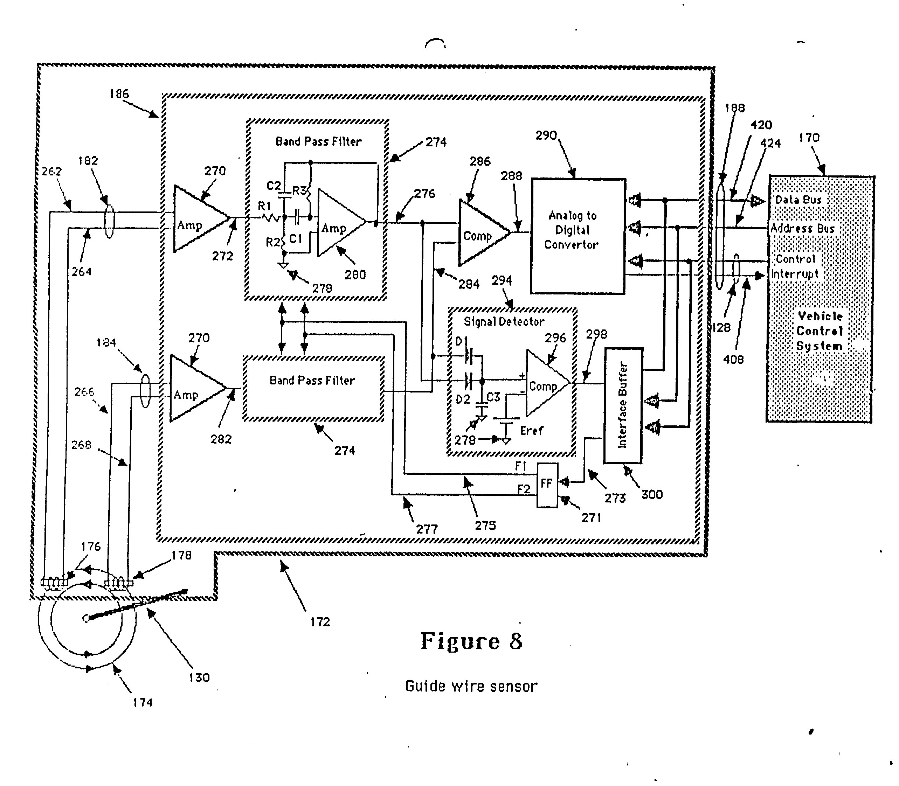

When a vehicle 102 is to follow one of the buried wire segments 130 of the path layout 122 shown in Figure 2, i.e. either wire segment 126 or wire segment 128, the lateral deviation of the vehicle relative to the path segment will be detected by means of a buried wire sensor arrangement 172 as shown in Figure 3. The buried wire sensor arrangement 172 is specifically adapted to detect magnetic fields 174 (symbolically shown in Figure 3) generated as a result of alternating current flowing through the buried wire path segment 130. Although various types of known arrangements can be employed for sensing the position of the vehicle 102 relative to the buried wire segment 130, the sensor arrangement 172 preferably comprises a pair of sensing coils 176 and 178 mounted to a mechanical structure 180 of the vehicle 102. As a result of the magnetic fields 174 flowing through the sensor coils 176, 178, voltage or "coil detection" signals are induced in each of the coils, the signals being indicative of the relative magnetic field strength detected by each of the coils. The coil detection signals from the sensor coils 176, 178 are applied on the conductor pairs 182,184, respectively, as input signals to the buried wire sensor circuitry 186. The buried wire sensor circuitry 186 is responsive to the coil detection signals on conductor pairs 182, 184 to amplify and filter the signals so as to extract a particular "frequency of interest." The magnitudes of the signals having the appropriate frequency are then compared, and appropriate digital signals are then applied on the bidirectional transmission line 188 as input signals to the vehicle control system 170 indicative of the relative position of the vehicle 102 with respect to the buried wire path segment 130. A detailed structure of one illustrative embodiment of a buried wire sensor arrangement 172 is described subsequently herein with respect to Figure 8.

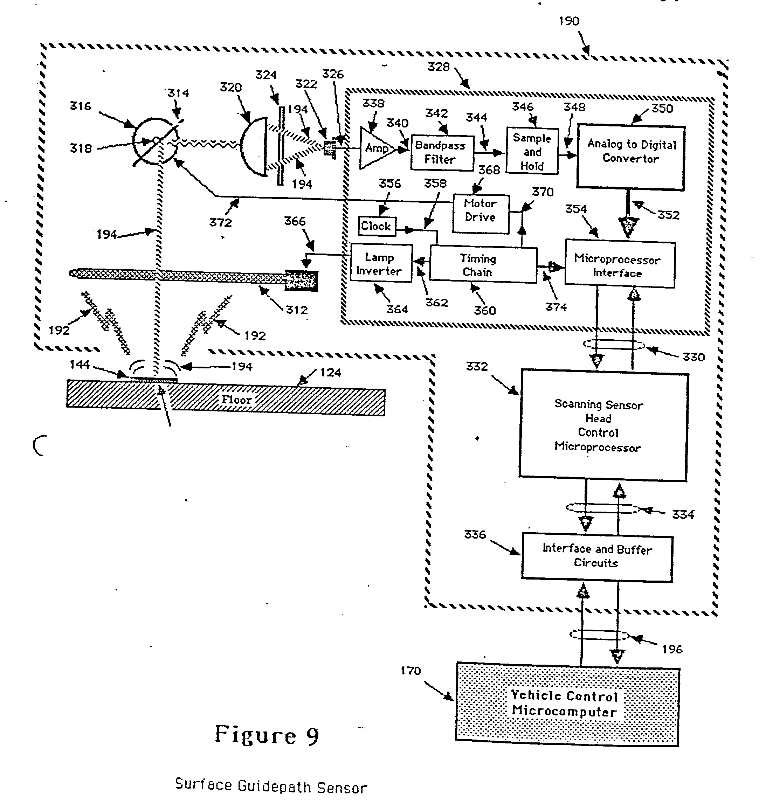

Again referring to Figure 3, each of the vehicles 102 also comprises a surface path sensor arrangement 190. Sensor arrangement 190 provides a means for following surface guidepath segments 144 of the path layout 122 shown in Figure 2. The sensor arrangement 190 is preferably of the type which applies ultraviolet lightwaves 192 (symbolically shown in Figure 3) or similar electromagnetic signals to the particular one of the surface guidepath segments 144 to be followed. The lightwaves 192 illuminate and excite materials of the guidepath segment 144, resulting in emission of visible lightwaves 194. As described in greater detail in subsequent paragraphs herein with respect to Figure 9, the emission of the visible lightwaves 194 is sensed by means associated with the sensor arrangement 190, and intelligence signals are generated on bidirectional transmission line 196 and applied as input signals to the vehicle control system 170. The intelligence signals are of a magnitude and polarity indicative of any lateral deviation of the vehicle 102 from the particular one of the surface guidepath segments 144 being followed. It should also be noted that the surface path sensor arrangement 190 is utilized to sense codes (previously described with respect to Figure 2) maintained on the floor surface. The intelligence signals on transmission line 196 comprise information indicative of the sensed marker codes.

Figure 3 also depicts an operator interface 198 which provides a means for manual entry of vehicle control commands and associated signals directly to the vehicle control system 170 by means · of bidirectional transmission line 200. For this purpose, the operator interface 198 can comprise, for example, a keypad or similar interface mechanism for transmitting information from an operator to the vehicle. In addition, the interface 198 can also comprise elements such as a display screen, LCD number readout display or similar device whereby information can be displayed for manual evaluation in response to corresponding signals applied from the vehicle control system 170 to the operator interface 198 by means of transmission line 200. For example, an operator may selectively "send" the vehicle 102 to a particular station along the path layout 122 to deliver a load which has been placed on the back of the vehicle. Information representative of the particular station to which the vehicle is to move, along with command codes indicative of the particular functions to be performed by the vehicle, can be entered by the operator through the keypad or similar device. Verification of the entered commands can be achieved through a reflection of the commands by the vehicle control system 170 to the display screen or like device associated with the operator interface 198.

Additionally, the operator interface 198 may include means for manual attachment of diagnostic equipment, whereby the operator could enter appropriate commands and signals could be applied by the control system 170 on transmission line 200 indicative of requisite diagnostic and maintenance information, such as vehicle battery voltages, etc. Somewhat similarly, if the control system 170 includes it own diagnostic sequences, signals could be applied on transmission line 200 to warning indicators associated with the operator interface 198 when the vehicle battery voltages decrease to a certain minimum value. Still further, the operator interface 198 could include obstacle detection devices and associated circuitry, whereby the detection of an obstacle could result in signals being applied to the control system on transmission line 200 so as to cause the vehicle 102 to stop or perform other functional emergency operations.

Although a substantial amount of information can be applied to and received from a particular vehicle 102 through the operator interface 198, guidance systems of the type described herein in accordance with the invention can also include means for providing communication between circuits of the vehicle 102 and centralized control systems. For example, the circuitry of the vehicle 102 as depicted in Figure 3 can also include a vehicle communication circuit 204. The communication circuit 204 can essentially operate as an "interface" circuit between the vehicle control system 170 and a centralized system controller 206. Signals received from the centralized system controller 206 can be processed by the communication circuit 204 and signals representative of received information or commands can be applied as input signals to the vehicle control system 170 through bidirectional transmission line 208. Similarly, signals representative of information to be supplied to the centralized system controller 206 from the vehicle control system 170 can be applied as input signals to the communication circuit 204 from control system 170.,

One illustrative example of the use of a centralized system controller 206 and the vehicle communication circuit 204 is the providing of information signals to the communication circuit 204 from the controller 206 which comprise information as to the next sequence of functions to be performed by the vehicle 102. Similarly, the "status" of the vehicle 102 can be provided to the centralized controller 206 through communication circuit 204. Examples of particular status information relating to a particular vehicle 102 include information associated with vehicle battery voltages, whether the vehicle is in an "unloaded" or "loaded" state, and similar information.

Commands supplied to the vehicle 102 from controller 206 through communication circuit 204 may be of numerous types. For example, a particular set of signals transmitted to circuit 204 from controller 206 may comprise information indicating that a particular vehicle 102 is to move to a particular work station along the path layout 122, obtain a material load, and then further move to another station along path layout 122, where the vehicle is to be unloaded. It is apparent that commands relating to unloading and loading functions, identification of a particular vehicle and identification of stations along path layout 122 can be "encoded" as binary coded information signals. It is also apparent that various types of encoded information sequences can be employed.

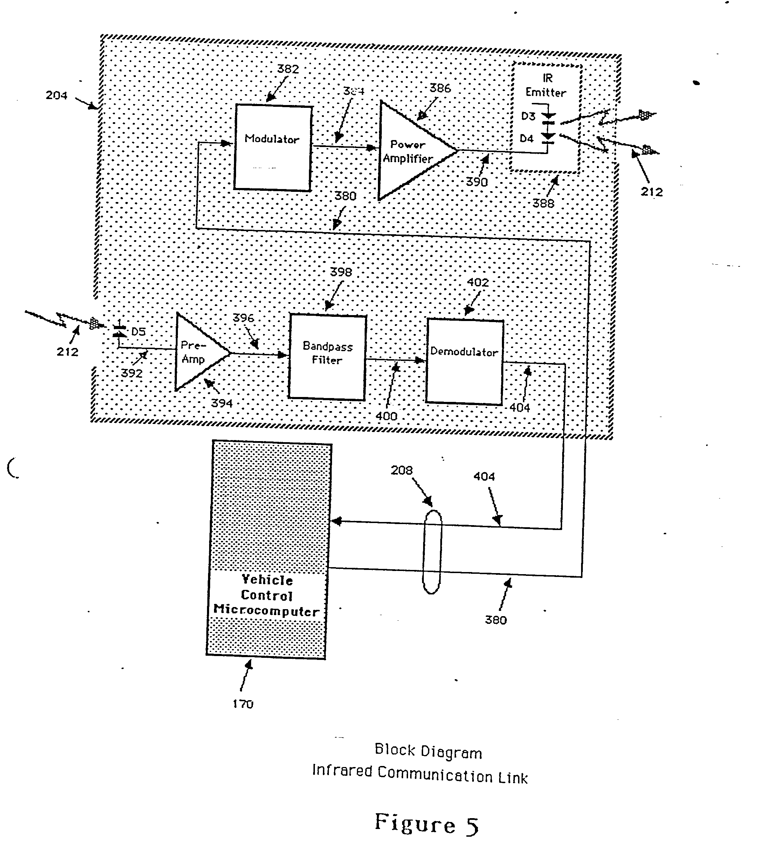

The signals which can be transmitted between the controller 206 and the vehicle communication circuit 204 are symbolically shown as information signals 212 in Figure 3. The particular configuration of the communication circuit 204 and the particular transmission medium for the information signals 212 can be any of several conventional circuit configurations and signal channels, respectively. For example, the information signals 212 could comprise radio or infrared (IR) signals. Alternatively, the information signals 212 could be applied over the buried wire path segments 130, with the vehicles 102 including inductive pickup circuitry for transmitting and receiving information signals. An exemplary embodiment of one particular circuit configuration for transmitting and receiving IR signals will be subsequently described herein with respect to Figure 5.

The vehicle control system 170 utilizes signals received from the vehicle communication circuit 204, operator interface 198, surface guidepath sensor arrangement 190, and buried wire sensor arrangement 172 for purposes of performance of various functional operations of the types previously described herein. Certain of these functions are associated with guidance and movement of the vehicle 102. For example, as earlier described, information signals received on transmission lines 188 and 196 from buried wire sensor arrangement 172 and surface guidepath sensor arrangement 190, respectively, are indicative of the lateral deviation of the vehicle 102 from the particular path segment being followed. These information signals are processed by the vehicle control system 170 so as to apply appropriate signals to vehicle electro-mechanical devices for purposes of steering the vehicle 102 to follow the path segment. Accordingly, the vehicle control system 170 is responsive to the information signals received on transmission lines 188 and 196 to generate appropriate steering "command" signals on transmission line 214. The signals generated on transmission line 214 are applied as input signals to steering motor drive unit 216, which provides a means for appropriately steering the vehicle 102 so as to follow a particular path segment or to undertake other functions requiring appropriate vehicle steering.

Various types of steering control circuitry can be employed. One type of drive unit 216 as shown in Figure 3 comprises a power servoamp 218, with the steering control signals on transmission line 214 applied as input signals thereto. The power servoamp 218 can be of the pulse-width modulated (PWM) type which provides relative efficiency with substantially low heat buildup. The power servoamp 218 is responsive to the steering control signals applied on transmission line 214 to generate appropriate steering motor control signals on conductors 220 and 222, whereby the steering motor control signals are applied to a conventional reversible-type steering motor 224. The steering motor 224 is, in turn, connected to a conventional steering reduction unit 226 for purposes of driving a steering wheel 244 or similar type of steering arrangement so as to appropriately guide the vehicle 102 along the particular path segment to be followed. It is apparent that the steering reduction unit 226 must drive the steering wheel 244 in a manner so that the buried wire sensor arrangement 172 and surface guidepath sensor arrangement 190 will physically move in correspondence to movement of the vehicle 102. This mechanical movement is symbolically represented in Figure 3 by the control lines 228 as shown in dotted line format.

In addition to controlling steering of the vehicle 102, the vehicle control system 170 is also adapted to provide appropriate signals to electro-mechanical units of the vehicle 102 so as to provide forward or rearward movement of the vehicle. Accordingly, information signals received from the vehicle communication circuit 204, operator interface circuit 198 and other circuitry previously described herein can be processed by the vehicle control system 170 so as to generate traction control signals on transmission line 230. The traction control signals on line 230 are applied as input signals to the traction motor drive unit 232. The traction motor drive unit 232 is conventional in design and can, for example, comprise a power servoamp 234, with the traction control signals on transmission line 230 applied as input signals thereto. The power servoamp 234 is responsive to the traction control signals on transmission line 230 to generate appropriate traction motor control signals on conductors 236 and 238. The signals on conductors 236 and 238 are applied as input signals to a conventional traction motor 240. The traction motor 240 provides an energizing means to move the vehicle 102, with the traction motor 240 connected to a conventional traction reduction unit 242. The traction reduction unit 242 provides a means, in combination with the traction motor drive unit 232, to appropriately energize a drive wheel 244 or similar device for causing movement of the vehicle 102.

The steering motor drive unit 216, steering reduction unit 226, traction motor drive unit 232 and traction reduction unit 242 are well-known and can comprise any one of numerous conventional configurations. A steering motor drive unit and steering reduction unit corresponding to units 216, 226, respectively, are generally described in DeBruine, U.S. Patent No. 4,307,791 issued December 29, 1981. A traction motor drive unit and traction reduction unit corresponding to units 232, 242, respectively, are disclosed in Houskamp, U.S. Patent No. 4,341,985 issued July 27, 1982.

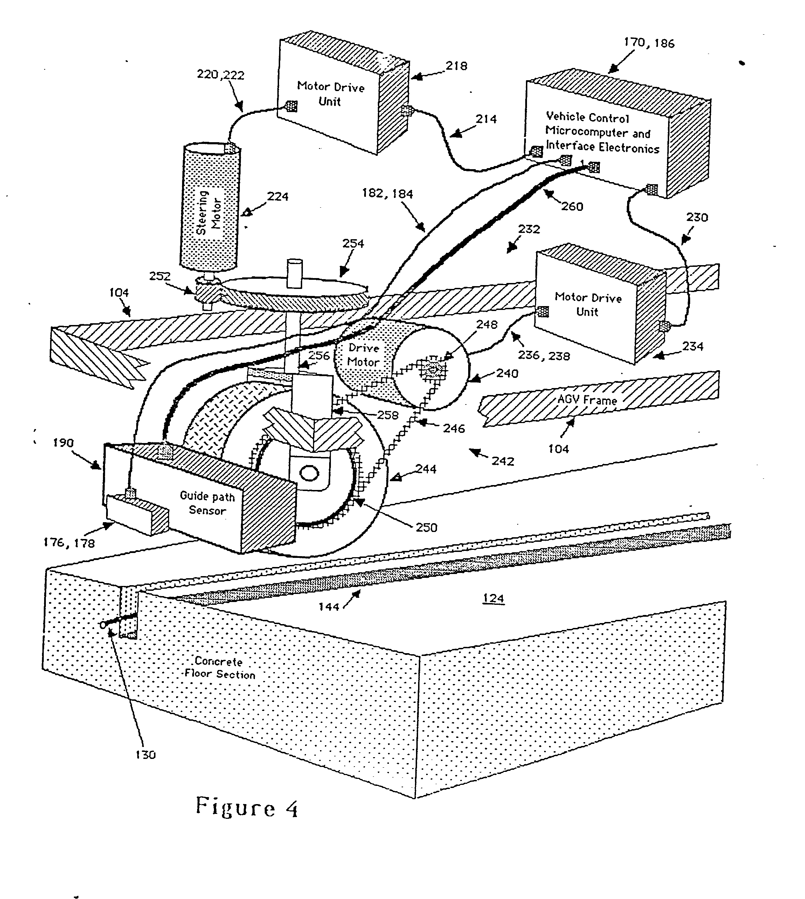

The vehicle control system 170 and associated electrical and electro-mechanical assemblies as depicted in Figure 3 can be physically positioned on the vehicle 102 in any one of a number of configurations. For example, Figure 4 depicts a general mechanical layout of the various vehicle assemblies shown in Figure 3 relative to the lower portion of the vehicle base 104, with the vehicle 102 shown symbolically positioned over both a buried wire path segment 130 located in a groove cut into the floor surface 124, and a surface guidepath segment 130. The vehicle 102 can comprise rear wheels (not shown) and a front traction steering and drive wheel 244 (symbolically shown in previously-described Figure 3). The traction motor 240 is connected to the drive wheel 244 by means of the conventional traction reduction unit 242, which can comprise a chain 246 engaging and interconnecting a sprocket 248 mounted to the traction motor 240, and a sprocket 250 directly mounted to the drive wheel 244. The traction drive motor 240 is driven through signals applied on the previously-described conductors 236, 238. The signals generated on conductors 236, 238 are applied to drive motor 240 as output signals from the portion of the traction motor drive unit 232 comprising the power servoamp 234. As previously described with respect to Figure 3, traction motor control signals are applied as input signals to the power servoamp 234 on transmission line 230 from the vehicle control system 170. As specifically shown in Figure 4, the power servoamp 234 can be encapsulated in a separate physical compartment, while the vehicle control system 170 can be located in an additional compartment.

With the drive wheel 244 providing both traction and steering, the steering reduction unit 226 previously described with respect to Figure 3 can comprise a first reduction gear 252 engaging a second larger-diameter reduction gear 254. The second reduction gear 254 can be connected through a shaft 256 to a clevis assembly 258 which provides an interconnection to the steering and drive wheel 244 in a manner so that rotation of the second reduction gear 254 results in pivotable movement of the wheel 244.

The first reduction gear 252 can be driven by the steering motor 224. As shown in Figure 4, the steering motor 224 can be a separate physical unit interconnected to an encapsulated power servoamp 218 through the conductors 220, 222. In turn, the encapsulated power servoamp 218 is electrically interconnected to the vehicle control system 170 through the transmission line 214 previously described with respect to Figure 3.

As further shown in Figure 4, the mechanical layout of the vehicle 102 includes a forward compartment housing the sensor coils 176, 178 of the buried wire sensor arrangement 172. The forward compartment can be made to pivot in correspondence with the steering and drive wheel 244. The actual interconnection between the pivotable wheel 244 and the sensor coils 176, 178 can be made in any conventional mechanical manner. The sensor coils 176, 178 are interconnected to the buried wire sensor circuitry 186 through wires comprising the conductors 182, 184. As also shown in Figure 4, the buried wire sensor circuitry 186 can be housed in the same mechanical unit as is the vehicle control system 170.

The guidepath sensor arrangement 190 can comprise a compartmentalized unit mounted in a manner so as to be pivotable in correspondence with movement of the steering and traction drive wheel 244. Although not particularly shown in Figure 4, it is apparent that the physical unit comprising surface path sensor arrangement 190 must be open at its lower portion so as to allow illumination of a surface guidepath from elements associated with the sensor arrangement 190. It should also be noted that a substantial portion of the electrical circuitry associated with surface path sensor arrangement 190 could be located in this physical unit. The interconnection between the physical compartment shown as the sensor arrangement 190 in front of the steering and traction wheel 244 can be electrically interconnected to other circuitry within the physical compartment comprising the vehicle control system 170 by means of a transmission line 260 as shown in Figure 4. The transmission line 260, and the division of components of the surface path sensor arrangement 190 between the compartment pivotable with the steering and drive wheel 244 and the compartment comprising the vehicle control system 170 can be made in any suitable manner.

As earlier explained, Figure 4 merely depicts one illustrative embodiment of a mechanical layout which could be employed in accordance with the invention. Various other mechanical layouts could also be employed, and the particular structural configuration of the mechanical units as shown in Figure 4 does not comprise any of the novel concepts of a guidance system in accordance with the invention.

One illustrative embodiment of a circuit configuration which can be employed for the buried wire sensor arrangement 172 depicted in Figure 3 for a guidance system in accordance with the invention is shown in schematic block diagram format in Figure 8. Referring specifically to Figure 8, the buried wire sensor coils 176, 178 can be located in a horizontal plane next to each other and positioned symetrically with respect to the steering wheel 244 previously described with respect to Figure 4. As the vehicle 102 having sensor coils 176, 178 mounted thereon passes above a buried wire path segment 130, the magnetic fields 174 resulting from the alternating current flowing through the path segment will correspondingly pass through the coils 176, 178, thereby inducing voltages therein. Referring specifically to the sensor coil 176, the voltage signal induced within the coil is carried on the conductor pair 182 comprising a pair of wires 262, 264. Similarly, the voltage signal induced in the sensor coil 178 is carried on the conductor pair 184 comprising a pair of wires 266, 268.

Referring first to the voltage signal induced in sensor coil 176, the signal is applied on wires 262, 264 as an input signal to amplifier circuit 270. Amplifier 270 is a conventional circuit which amplifies the voltage signal on wire pair 262, 264, and generates the resultant amplified signal on conductor 272, with the signal on conductor 272 referenced to vehicle signal ground 278. The amplified voltage signal is then applied as an input signal to a conventional band pass filter circuit 274. The band pass filter circuit 274 is conventional in design and provides a means for "frequency discrimination," whereby the resultant output signal of the filter 274 generated on conductor 276 comprises only signals within an appropriate frequency range which may be representative of signals induced in the sensor coils 176, 178 from the magnetic fields 174. That is, the band pass filter 274 will extract spurious signals of different frequencies which may result from voltages induced in the sensor coils 176, 178 as a result of extraneous magnetic fields, such as those resulting from electrical lighting, industrial motors and similar equipment within the facilities in which the guidance system 100 is situated. In addition, the filter 274 can provide frequency discrimination for purposes of distinguishing among buried wire path segments. An exemplary circuit arrangement for selectively controlling the detection frequencies is described in subsequent paragraphs herein.

Again, the band pass filter circuit 274 is conventional in design and can comprise, for example, a series input resistor R1 having one terminal connected to the output of amplifier 270, and another terminal connected to one terminal of a resistor R2 as shown in Figure 8. The other terminal of resistor R2 is connected to the vehicle signal ground 278, with the vehicle reference ground voltage at location 278 being applied as an input signal to a conventional amplifier 280. The terminal of resistor R1 common to resistor R2 is connected as an input to amplifier 280 through a series capacitor C1. In addition, the band pass filter circuit 274 also includes a resistor R3 having one terminal connected to a common terminal of capacitor C1 with another terminal connected to the output conductor 276. A second capacitor C2 is connected essentially in parallel with the resistor R3. With this configuration, the combination of resistors R1, R2 and capacitor C1 provides a filter circuit which filters out voltage signals having frequencies below a predetermined frequency as determined by the values of resistors R1, R2 and capacitor C1. Similarly, the parallel combination of capacitor C2 and resistor R3 essentially provides filtering of signals having frequencies above a predetermined frequency as determined by the values of capacitors C2 and R3.

As earlier described, the band pass filter 274 is frequency selective. An exemplary circuit configuration for selectively setting the "pass" frequency as one of two frequencies F1 or F2 is shown in Figure 8. Specifically, a conventional flip-flop 271 is selectively set or reset under control of an input signal on line 273 from subsequently described interface buffer 300. When the flip-flop 271 is set, the digital output signal on line 275 is "high" and can be applied as an input signal to filter 274. Although not shown in Figure 8, the filter 274 can include conventional switching components which cause adjustment of filter circuit components so that the pass band is centered about frequency F1. Similarly, with flip-flop 271 reset, the ditigal output signal on line 277 is "high" and can be utilized to set switch components so as to cause adjustment of filter circuit components to center the pass band about frequency F2.

In accordance with the foregoing, it is apparent that additional flip-flops and similar circuitry can be employed to selectively control discrimination among several frequencies. Also, it should be noted that the flip-flop control signal on line 273 is under command of the vehicle control system 170.

In a similar circuit configuration, the signals representative of voltages induced in the sensor coil 178 are applied on wire pair 266, 268 as input signals to a second amplifier 270. The resultant amplified output signal is applied on conductor 282 as input signal to a second band pass filter 274. The second band pass filter 274 generates a filtered voltage signal on conductor 284 (referenced to vehicle signal ground) representative of the voltage signal induced in sensor coil 178 within a predetermined frequency range. The frequency range for the second band pass filter 274 is also controlled by flip-flop 271.

The voltage signals generated on the conductors 276 and 284 are each applied as input signals to a comparator circuit 286. The comparator circuit 286 is conventional in design and can, for example, comprise conventional difference amplifier circuitry. The comparator 286 provides a means for comparing the voltages on conductors 276, 278 representative of the respective voltages induced within the sensor coils 176, 178, and for generating a voltage signal representative of the difference between these signals on conductor 288. With the sensor coils 176, 178 positioned symetrically with respect to the steering wheel 244, a nonzero difference voltage will be generated on conductor 288 only when the vehicle 102 laterally deviates from the particular buried wire path segment being followed.

With the vehicle control system 170 comprising a programmable arrangement the buried wire sensor arrangement 172 also includes a conventional analog-to-digital (A/D) converter 290 to which the analog difference voltage signal on conductor 288 is applied. The A/D converter 290 converts the analog difference voltage signal on conductor 288 to a digital information signal which is generated as an output signal of the buried wire sensor arrangement on the bidirectional transmission line 188. The A/D converter 290 is triggered by the vehicle control system 170 to start the conversion through signals applied on bidirectional control bus 428. When a conversion sequence is completed, an interrupt signal is applied to the vehicle control system 170 on interrupt line 408. The interrupt line 408 comprises part of the bidirectional control bus 428.

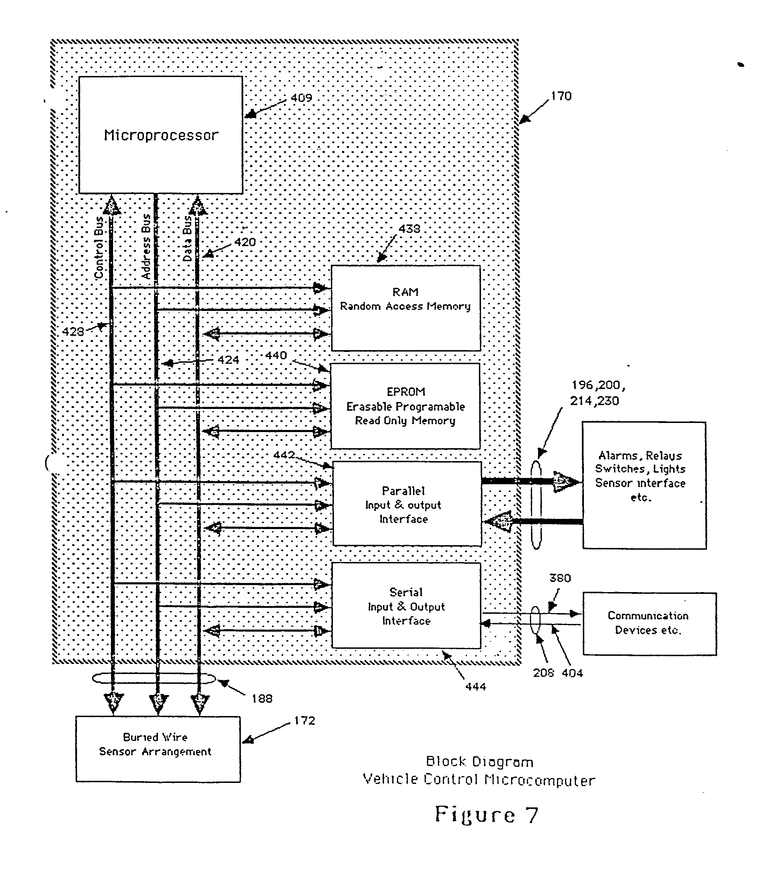

The converted digital output signal, which can be characterized as a steering control information signal, can be applied as an input signal to a data bus 420 of the vehicle control system 170, assuming the control system 170 comprises a digital computer arrangement. An exemplary computer arrangement which can be utilized with the vehicle control system 170 will be described in subsequent paragraphs herein with respect to Figure 7.

It is apparent from the foregoing description that if the vehicle 102 is not following a buried wirepath segment 126, 128, no voltage signals within a particular frequency range are induced within the sensor coils 176, 178. Accordingly, the absence of a non-zero difference voltage on conductor 288 may actually indicate the absence of any induced voltages in the sensor coils as a result of magnetic fields resulting from buried wire alternating currents. Accordingly, a means must be provided to detect the absence or presence of actual signals resulting from induced voltages within the sensor coils 176, 178. Accordingly, again referring to Figure 8, the voltages generated on conductors 276, 284 as output signals from band pass filters 274 are applied as input signals to a signal detection circuit 294.

Like the band pass filters 274, the signal detection circuit 294 is well-known and conventional in design. For example, the detection circuit 294 can comprise a pair of diodes D1 and D2, each connected to the conductors 276 and 284, respectively. The output terminals of each of the diodes D1 and D2 are connected to one terminal of a capacitor C3, having its opposing terminal connected to the vehicle reference ground 278. These terminals of diodes D1 and D2 are also connected to an input terminal of a conventional comparator circuit 296. A voltage signal having a magnitude $E_{ref}$ (relative to vehicle signal ground 278) is applied as a second input signal to the comparator 296. With the foregoing circuit configuration, and with the "plus" terminal of comparator 296 connected to diodes D1, D2, and the "negative" terminal of comparator 296 having the reference voltage $E_{ref}$ applied thereto, an output voltage of the comparator 296 as generated on conductor 298 will have a positive polarity only if the voltage signal strength of either the voltage signal on conductor 276 or the voltage signal on conductor 284 is greater than the magnitude of the reference voltage $E_{ref}$. Accordingly, an appropriate value for $E_{ref}$ can be chosen so as to determine if the signals on conductors 276, 284 are signals representative of induced voltages in the sensor coils 176, 178 resulting from the existence of a buried wire segment 130.

The voltage on conductor 298 indicative of the presence or absence of induced voltages within the sensor coils 176, 178 can be applied through a conventional interface buffer circuit 300 to the transmission line 188 connected to the data bus 420 of the vehicle control system 170. In this manner, the vehicle control system 170 can "interrogate" the buried wire sensor arrangement 172 for purposes of not only obtaining an actual output signal from A/D converter circuit 290 indicative of steering information, but can also obtain signals indicating the presence or absence of voltages induced within the sensor coils 176, 178.

As will be described in subsequent paragraphs herein, a preferable embodiment of the vehicle control system 170 includes a digital computer circuit configuration. To obtain the steering information signal with such a configuration, appropriate signals can be applied as input signals to the A/D converter circuit 290 through the control bus 428. In a conventional manner, the vehicle control system 170 can selectively "enable" the A/D converter 190 through the application of signals on address bus 424, as well as the control bus 428. Similarly, address and control enable signals on buses 424 and 428, respectively, can selectively enable the interface buffer 300 so as to interrogate the "signal present" signal on conductor 298 and to control the frequency discrimination flip-flop 271.

Again referring to Figure 8, and as earlier referenced with respect to initiation of A/D conversion, interrupt signals can be applied to the vehicle control system 170 on interrupt line 408. These interrupt signals can result from the completion of an A/D conversion by the converter 190. The interrupt signals can be utilized by the main program sequences executing in the vehicle control system 170 so as to "read" the digital steering information signals from the converter 190. It should also again be noted that an exemplary embodiment of a vehicle control system 170 which can be employed with the buried wire sensor arrangement 172 as depicted in Figure 8 will be described in subsequent paragraphs herein.

A schematic block diagram of one illustrative embodiment of circuitry which can be employed in the surface guidepath sensor arrangement 190 depicted in Figure 3 is shown in Figure 9. As shown therein, the surface guidepath sensor arrangement 190 can include a U-shaped ultraviolet tube 312 for purposes of emanating the electromagnetic lightwaves 192 and applying the lightwaves 192 to the surface guidepath segment 144 so as to illuminate the same. As previously described, the surface guidepath segment 144 comprises material which cause the guidepath segment to emit visible electromagnetic lightwaves 194 in response to the illumination by the tube 312. As also earlier described with respect to Figure 4, the tube 312 and associated components of the sensor arrangement 190 will be pivotable in correspondence with the steering wheel 244. Preferably, the ultraviolet tube 312 is enclosed within a reflector housing (not shown) or a similar arrangement for directing a substantial portion of the lightwave intensity toward the floor surface 124. Also, the sensor arrangement 190 can include optical filters (not shown) or similar means positioned beneath the tube 312 for purposes of filtering out visible light and permitting the ultraviolet lightwaves to pass therethrough.

Positioned above the ultraviolet tube 312 is a scanning mirror 314 which is mounted to a driving scanning motor 316' through a mirror mounting bracket 318. The scanning motor 316 is a reversing motor controlled through means subsequently described herein to oscillate the scanning mirror 314 about the mirror mounting bracket 318. The angle through which the mirror 314 is rotated and the oscillation frequency are matters of design choice, although it has been found that a rotation angle of approximately 20° and an oscillation frequency of approximately 56 cycles per second is preferable. A lens 320 is mounted in a manner so as to receive reflections of the emitted visible lightwaves 194 from the scanning mirror 314, and focus the reflections onto a conventional photo-diode 322. Preferably, an optical filter 324 is positioned between the photo-diode 322 and the lens 320 to filter out light other than lightwaves having a frequency of those emitted from the surface guidepath segments 144. In accordance with the foregoing, as the scanning mirror 314 oscillates back and forth, the conventional photo-diode 322 is focused on the floor surface 124 and sweeps across the surface guidepath segments 144 through an angle and with an oscillation frequency determined by the driving signals applied to the scanning motor 316. Preferably, the rotation angle of the scanning mirror 314 provides for a lateral "sweep" of approximately a four-inch section of the floor surface 124. Also, the optical system is preferably configured so that the size of the area viewed by the photo-diode 322 at any given instance of time is approximately one-half inch in diameter.

The output signals from the photo-diode 322 are applied on transmission line 326 as input signals to a circuit configuration which can be characterized as the guidepath sensor circuitry 328. The guidepath sensor circuitry 328 provides a means for filtering the signals received from the photo-diode 322, converting these analog signals into digital format, and applying the representative digital signals as input signals on transmission line 330 to a guidepath sensor microprocessor 332. The microprocessor 332 is utilized to process the input signals on transmission line 330 and determine, for example, those signals representative of the lateral deviation of the vehicle 102 relative to edges of the surface guidepath segment 144, and those signals representative of the detection of marker codes. The surface guidepath sensor microprocessor 332 then applies appropriate signals on bidirectional transmission line 334 to conventional interface and buffer circuitry 336. The conventional interface and buffer circuitry 336 provides functions such as, for example, serial to parallel signal conversions, and then further applies appropriate representative signals to the vehicle control system 170 through the bidirectional transmission line 196. Although not shown in detail, it is apparent that the bidirectional transmission lines 330, 334 and 196 can also comprise conductive interconnections with the data, address and control buses of system 170 as conventionally known in general digital computer design.

Again referring to Figure 9, the guidepath sensor circuitry 328 can include a photo-diode amplifier 338 to which the output signals of the photo-diode 322 are applied. The amplifier 338 amplifies the output signals from the photo-diode 322 and generates the representative enhanced signals on conductor 340. The signals on conductor 340 are applied as input signals to a conventional band pass filter 342 which filters out signals having frequencies other than signals produced by excitation of the ultraviolet tube 312. For example, the ultraviolet tube 312 may be excited at a frequency of 4 KHz. Accordingly, the visible lightwaves 194 emitted from the surface guidepath segments 144 will have a frequency of approximately 8 KHz, because light produced by the ultraviolet tube 312 has no polarity, i.e. emitted lightwaves 194 from the surface guidepath segments 144 occur at each half cycle of the 4 KHz excitation.

The filtered output signals of the band pass filter 342 are applied on conductor 344 as input signals to a sample-and-hold circuit 346. The sample-and-hold circuit 346 is conventional in design and provides a means for periodically sampling the filtered signals on conductor 344. In accordance with conventional sampling theory, the sampling rate can be determined so that the signal to noise (S/N) ratio is sufficiently high and no essential information is lost. The requisite sampling rate is, of course, a function of the frequency of the filtered signals on conductor 344.

The sampled output signals from the sample-and-hold circuit 346 are applied on conductor 348 as input signals to a conventional A/D converter circuit 350. The sampled analog signals from conductor 348 are thus converted into digital sample signals and applied on transmission line 352 to a conventional microprocessor interface circuit 354. The microprocessor interface circuit 354 comprises circuitry which formats the digital sample signals on line 352 into appropriate form for input to the microprocessor 332 through the bidirectional transmission line 330. In accordance with the foregoing, sampled digital signals can be applied to the microprocessor 332 which represent information signals indicative of the relative position between the vehicle 102 and a surface guidepath segment 144, and also indicative of any code spurs detected on the floor surface 124.

In brief explanation, the guidepath sensor microprocessor 332 can utilize the sampled digital signals from the sensor circuitry 328 to determine the "centerline" position of the surface guidepath segments 144 or, alternatively, can apply appropriate signals to the vehicle control system 170 for the control system 170 to determine the centerline position. In addition, the signals received from the sensor circuitry 328 can also be utilized to determine right and left edge positions of the surface guidepath segments 144 with respect to the vehicle 102. Still further, signals from the guidepath sensor circuitry 328 can be employed to detect the presence of code spurs on the floor surface 124. For example, and as earlier described herein, these code spurs can indicate the presence of a "Y" intersection in the guidepath segments 144, and the vehicle control system 170 can be programmed so as to respond to the signals indicative of the code spurs to follow a left or right branch of the "Y" intersection. A detailed description of the use of a guidepath sensor arrangement similar to sensor arrangement 190 for purposes of detecting the presence of a surface guidepath segment 144, and for purposes of controlling movement of a vehicle 102 with respect to surface guidepath segments is found in DeBruine, U.S. Patent No. 4,307,791 issued December 29, 1981.

The guidepath sensor circuitry 328 also includes circuits for applying excitation signals to the ultraviolet tube 312, and for energizing the scanning motor 316. Again referring to Figure 9, signals from a conventional clocking circuit 356 can be applied as input signals over transmission line 358 to a timing chain circuit 360. The timing chain circuit 360 provides a means for reducing the clocking signals from clock 356 to various requisite frequencies. For example, one such frequency can correspond to the 4 KHz rate at which the ultraviolet tube 312 is to be excited. Accordingly, signals from the timing chain 360 can be applied at this appropriate frequency rate over transmission line 362 as input signals to a conventional lamp inverter circuit 364, with the conventional lamp inverter circuit 364 applying appropriate excitation signals to the ultraviolet tube 312 on transmission line 366.

The timing chain circuit 360 can also be utilized to apply input signals at the appropriate 56 Hz rate to a conventional scanning motor drive circuit 368 on transmission line 370. The conventional motor drive circuit 368 then applies appropriate driving signals to the scanning motor 316 over transmission line 372.

The timing chain circuit 360 can also be utilized to apply various types of timing signals on transmission line 374 to the guidepath sensor microprocessor 332 through the interface circuit 354 and transmission line 330. For example, the signals applied to the interface circuit 354 can include clock signals, interrupt signals and signals indicative that a scan by the scanning mirror 314 is being initiated. Specific timing signals and the functional operations associated therewith are described in detail in DeBruine, U.S. Patent No. 4,307,791 issued December 29, 1981. Although a specific circuit configuration for the surface guidepath sensor arrangement 190 has been described in the foregoing paragraphs, it should be emphasized that various types of circuit configurations can be alternatively employed.

As earlier described with respect to Figure 3, the vehicle 102 can include a vehicle communication circuit 204 having a communications interface with the vehicle control system 170 through bidirectional transmission line 208. As also earlier described, the communication circuit 204 can be utilized to provide directional communications with a centralized system controller 206. Although various types of communication circuits and transmission media can be employed, an illustrative embodiment of the type of circuit configuration for the vehicle communication circuit 204 utilizing infrared (IR) transmission signals is depicted in block diagram format in Figure 5. Referring thereto, the IR communication circuit 204 includes both a transmitting path for transmitting IR signals to the centralized system controller 206, and a reception path for receiving IR signals from the controller 206. As previously described, the transmitted and received signals may comprise various types of information relating to status of the vehicle 102 and functional operations to be performed thereby.

For transmission operation of the communication circuit 204, digital signals having the information to be provided to the system controller 206 are applied in parallel format from the data bus of the vehicle control system 170 through a serial I/O interface module (not shown in Figure 5) which comprises part of system 170 and will be described in subsequent paragraphs with respect to Figure 7. The interface module is conventional in design and provides a means for converting the parallel signals into a serially formatted binary data stream. The serial data stream is then applied on transmission line 380 as a series of input signals to a modulator 382. The modulator 382 is conventional in design and provides a means for converting the serial data signals into an appropriate format for IR transmission. For example, the modulator 382 can convert the lower magnitude level of the input digital signals to a particular frequency $f_1$ and further convert the upper magnitude levels of the serial data signals into analog signals of a second frequency $f_2$. It should be noted that the functional operation of the modulator 382 is relatively similar to the operation of a conventional telephone "modem" commonly employed as an interface between telephone lines and computer terminals for appropriately converting signals between analog/digital and parallel/serial format.

The resultant modulated signals output from the modulator 382 are applied over transmission line 384 as input signals to a conventional power amplifier 386. Once the modulated signals are amplified, they are applied as input signals to an IR emitter circuit 388 over transmission line 390. The IR emitter circuit 388 is also conventional in design and provides a means for converting the amplified electrical modulated signals into the appropriate IR transmission signals 312, which are then transmitted to a listening receiver or similar device associated with the vehicle system controller 206 shown in Figure 3. As symbolically shown in Figure 5, the IR emitter circuit 388 can include a number of series-connected conventional diodes, such as diodes D3 and D4, with the emitter terminal of diode D4 connected to the output transmission line 390 of the amplifier 386.

The receiving path of the communication circuit 204 can include an IR receiver in the form of a diode D5 or similar detecting device. The diode D5 is a conventional element which is adapted to generate a relatively small signal on transmission line 392 (connected to its base terminal) when an IR communications signals 212 transmitted from the system controller 206 impinges on the diode D5. This resultant signal on transmission line 392 will comprise information signals at the two transmission/re-

ception frequencies $f_1$ and $f_2$. The signal is applied as an input signal to a pre-amp 394, which applies an amplified signal on transmission line 396 as an input signal to conventional band pass filter 398. The band pass filter 398 is utilized to extract spurious signals having frequencies outside the range of the frequencies $f_1$ and f. This filtered signal is then applied on transmission line 400 as an input signal to a conventional demodulator circuit 402. The demodulator 402 is responsive to the analog input signals on transmission line 400 to convert the signals into a serial data stream, with the high logic level corresponding to received signals having frequency $f_2$ and the low logic level corresponding to signals having frequency $f_1$.

The resultant demodulated signals are applied as a serial data stream on transmission line 404 as input signals to the vehicle control system 170. Although not shown in Figure 5, the serial data stream is applied to the previously described I/O interface module and converted to parallel format with appropriate logic levels for transmission on the data bus of system 170. These parallel data signals can then be processed by the vehicle control system 170 for purposes of executing various vehicle functional operations as previously described herein.

Although the foregoing paragraphs describe an IR circuit configuration for use with the communication circuit 204, it should be emphasized that various types of communication circuitry and transmission media can be employed for signal communications between the vehicle 102 and the centralized system controller 206. Such communications systems can utilize radio signals, signal communications over buried wire path segments or similar media without departing from the novel concepts of a guidance system in accordance with the invention.

As generally described herein, the vehicle control system 170 is utilized to control various functions of the vehicle 102 in response to communications from assemblies such as the buried wire sensor arrangement 172, surface guidepath sensor arrangement 190, operator interface 198 and vehicle communication circuit 204. Control of the vehicle 102 requires transmission of signals to the previously-described assemblies, in addition to the transmission of steering and traction con trol signals to the control units 216 and 232 as previously described with respect to Figure 3.

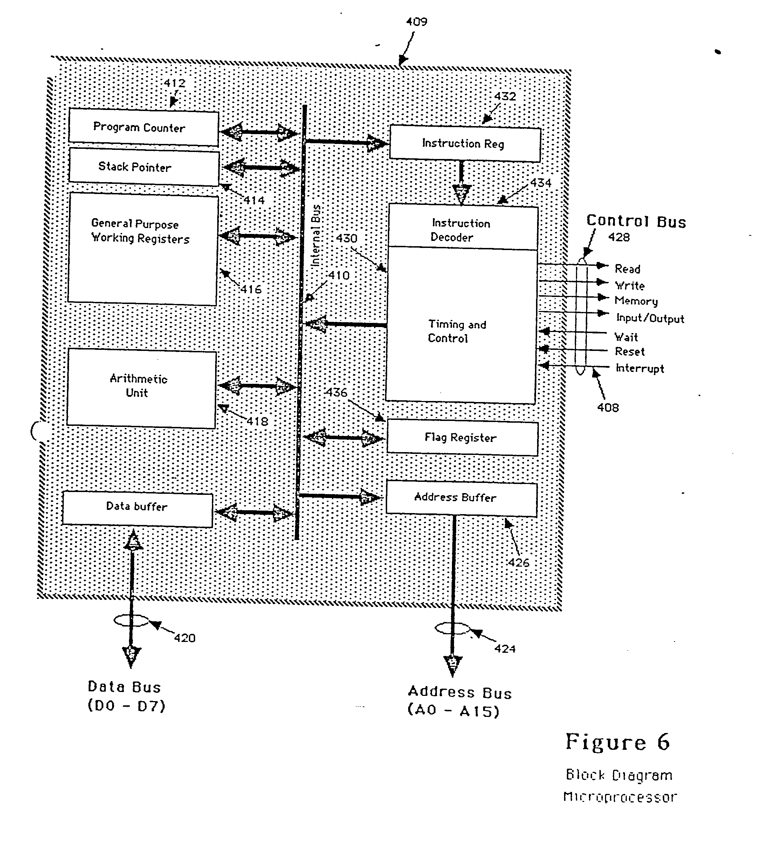

The particular structural configuration of the control system 170 can comprise numerous types of circuit designs. Preferably, the control system 170 is in a form of a programmable device such as the microcomputer 170 depicted in Figure 7. As shown therein, the microcomputer 170 can comprise a conventional microprocessor 409. Although various types of well-known and commercially available devices can be employed for the microprocessor 409, one typical internal configuration of a microprocessor 409 is shown in Figure 6, and a brief and simplistic description thereof will be provided.

Referring specifically to Figure 6, the microprocessor 409 comprises an internal bus 410 which provides a means for bidirectional communication between conventional circuit components of the microprocessor 409. For example, signals can be transmitted to and received from the program counter 412, which comprise signals representative of the "next" instruction in the microcomputer memory to be executed. Communication can also be provided between the internal bus 410 and microprocessor components such as the stack pointer 414, general purpose registers 416 and arithmetic unit 418. Each of these processor components is well-known to those skilled in the art of internal computer system design.

The transmission and reception of data from memories and other components of the vehicle control microcomputer 170 is provided by the data bus 420 which is connected to the internal bus 410 through a conventional data buffer 422 so as to provide bidirectional communication therewith in the form of 8-digit parallel binary signals. The internal bus 410 is also connected to an address bus 424 through an address buffer 426. The microprocessor 408 can provide, for example, 16-digit parallel binary address signals on the bus 424 for directed communication between the microprocessor 408 and the various memories and other devices having signal communications through the data bus 420.

Conventional system control is provided by interconnection of the control bus 428 to timing and control circuitry 430. Communication signals from the conventional timing and control circuitry 430 can be applied to various components of the microprocessor 409 through the internal bus 410.

The microprocessor 409 also includes other conventional circuit components, including an instruction register 432. The instruction register 432 comprises a register to which the "next" instruction is stored for purposes of decoding and execution. The data within the instruction register 432 is applied to the instruction decoder 434 which comprises conventional circuitry for decoding the instruction data received from the next program location in memory. The microprocessor 409 can also include such conventional components as a flag register 436 utilized for various programming control within the processor 408.

The control bus 428 can be characterized as comprising a series of individual command signal leads. The signal leads include "transmitted" commands shown in Figure 6 as the "read," "write," "memory" and I/O" commands. In addition, the control bus 428 is adapted to apply certain "received" commands to the timing and control circuitry 430. These commands are symbolically shown in Figure 6 as the "received" commands "wait," "reset" and "interrupt." The use of these commands is well-known in the field of computer system design. For example, if data is to be read from a certain address location in a memory of the vehicle control microcomputer 170, "enable" signals can be applied to the "read" and "memory" command leads from the timing and control circuitry 430. Correspondingly, the address of the particular memory location to be read can be transmitted on address bus 424, while the data to be read from the particular memory location will be applied to the microprocessor 409 on data bus 420. Similarly, when data is to be applied to a particular I/O device associated with the vehicle microcomputer 170, "enable" signals can be applied on the "write" and "I/O" signal command leads from the timing and control circuitry 430. Correspondingly, the address designation of the I/O device can be applied on address bus 424, while the particular data to be transmitted to the I/O device can be applied on data bus 420. Again, the circuitry associated with microprocessor 409, and microprocessor 409 itself are wellknown in the art. Any one of numerous commercially-available microprocessors can be adapted for use as the microprocessor 408. For example, a Zilog Z80 processor unit can be utilized.

Returning again to Figure 7, the vehicle control microcomputer 170 includes memory storage elements such as the random access memory (RAM) 438. The RAM 438 is conventional in design and includes memory locations wherein data may be stored and modified during execution of program sequences. Similarly, for storage of "permanent" data or instructions wherein modifications must be made only occasionally, a conventional erasable-programmable read only memory (EPROM) 440 is also employed.

Both the RAM memory 438 and the EPROM memory 440 are interconnected with the microprocessor 408 so as to allow control and address location signals to be applied on the control bus 428 and address bus 424, respectively. In addition, for purposes of reading data from the memories into the microprocessor 409, and for writing data into the memories, bidirectional communication is established between the RAM memory 438, EPROM memory 440 and the microprocessor 409 through data bus 420.

For purposes of intercommunication with external devices, the vehicle control microcomputer 170 also includes a parallel I/O interface module 442 and a serial I/O interface module 444. The parallel interface module 442 provides a means for transmitting and receiving data signals between the microprocessor 409 and external devices which generate and receive signals in parallel format. For example, the parallel interface module 442 will be utilized as the microcomputer interface for the data signals received from and transmitted to the surface guide path sensor arrangement 190 on transmission line 196. The interface module 442 can also be utilized for purposes of transmitting parallel data signals to devices such as alarms, lights and relay switches. The serial interface module 444 is utilized to interface with external devices in a serial format. For example, data signals transmitted to and received from the vehicle communication circuit 204 previously-described with respect to Figures 3 and 5 will be in serial format, and will be interfaced with the microprocessor 409 through the interface module 444.

Like the RAM memory 438 and EPROM memory 440, the interface modules 442 and 444 are interconnected to the microprocessor 409 through the control bus 428 and address bus 424 for purposes of applying control and address information data signals, respectively, to each of the modules. In addition, the interface modules 442 and 444 are interconnected to the processor 408 through data bus 420 so that data signals are bidirectionally transferrable between the modules 442, 444 and processor 408. It should be emphasized that the general circuitry of the microcomputer 170 and the functional operations associated therewith are well-known in the field of computer system design. Accordingly, any one of numerous commercially available microcomputers can be adapted for use as microcomputer 170. In addition, it should also be emphasized that the vehicle control system 170 need not specifically be of a microcomputer design. Other types of digital computers could be employed in accordance with the invention. Indeed, although it would not be a preferable embodiment of the control system 170, analog circuitry could be designed to perform the requisite functions of the control system 170.

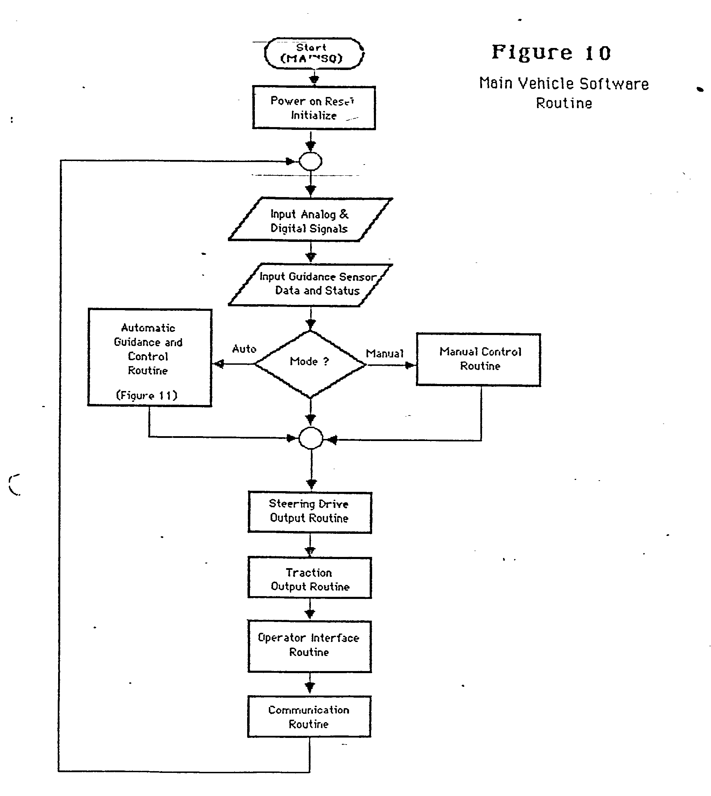

Operational sequences of the vehicle control system 170 and the microprocessor associated with the surface guide path sensor arrangement 190 are illustrated in the diagrams depicted in Figures 10-12. Referring specifically to Figure 10, a diagram is shown for a real-time overall operating sequence which can be utilized in the vehicle control microcomputer 170 previously described with respect to Figure 7. As shown in Figure 10, the overall operating sequence is initiated at the main entry point MAINSQ, and comprises a repetitive sequence for transmission and reception of various data signals and the performance of various functional operations associated with the attendant vehicle 102. Functional entry to MAINSQ in the instruction sequence of the control microcomputer 170 is performed in response to activation of vehicle power or a similar initiation action. General initiation functions are first performed, such as activation of battery power, etc. In addition, various data structures within the programs of the control microcomputer 170 may be "reset" at this time. It should be emphasized that such functions are not a part of the repetitive sequence of MAINSQ, and need be performed only once upon activation of the attendant vehicle 102. After such activation, the sequence MAINSQ will initiate repetitive operations.

Still referring to Figure 10, and following initialization of data structures and various other functions, the control microcomputer 170 receives various analog and digital data signals as input signals on the previously described data bus 420. These input signals can include various vehicle parameters in the form of signals indicative of characteristics such as vehicle velocity, distance traveled since the last reception of vehicle parameters, and like characteristics. The signals received by the control microcomputer 170 will typically be received from sensors or other vehicle circuitry which indicate the status of parameters such as vehicle battery voltage, etc.

The majority of the input data signals received by the vehicle control microcomputer 170 will be in digital format. Examples of such input data signals are those which are received from sensor switches employed to detect obstacles, switches indicative of an open vehicle door, signals received through the operator interface 198 from a programmable keyboard or the like, and various other types of digital data signals. Included in these data signals can be signals indicative of whether the attendant vehicle 102 is in an "automatic" or a "manual" mode, as described in subsequent paragraphs. Other exemplary input data signals can include those indicative of start/stop sensors and like devices.

Following the input of these analog and digital data signals representative of various vehicle parameters, additional input data signals are received by the control microcomputer 170 from the surface guide path sensor arrangement 190 and the buried wire sensor arrangement 172. As earlier described, the buried wire sensor arrangement 172 provides signals on data bus 420 (as shown in Figure 3) representative of the lateral deviation of the vehicle 102 from a particular buried wire path segment. As also described with respect to Figure 8, additional signals can be received from the buried wire sensor arrangement 172 indicative of the presence or absence of sensor coil signals induced by a buried wire path segment. The signals received on the data bus 420 will be in digital format, with the analog signals indicative of vehicle lateral deviation from the buried wire segments being converted to digital format by conventional A/D converter circuitry therein. The data signals are stored in predetermined memory locations during this phase of the sequence.

The data signals which are received as input signals by the control microcomputer 170 from the surface guide path sensor 190 may include information not only related to the lateral deviation of the attendant vehicle 102 from a particular surface guide path segment 144 being followed, but may also include information signals relating to the detection of surface path codes. It should be noted that the surface guide path sensor arrangement 190 includes the guide path sensor control microprocessor 322 as previously-described with respect to Figure 9. The microprocessor 322 essentially provides "conditioning" and "preprocessing" of the data signals representative of surface guide path and marker code detection. Accordingly, referring briefly to Figure 9, digital data signals generated by the surface guide path sensor microprocessor 332 as transmitted through the interface and buffer circuitry 336 can be applied to the vehicle microcomputer 170 merely over a "handshake" bus or similar arrangement. That is, there need be no "preconditioning" of these data signals by peripheral apparatus associated with the control microcomputer 170. It should also be noted that the data signals received from the surface guide path sensor arrangement 190 can include information relating not only to the lateral deviation of the attendant vehicle 102 from a surface guide path segment 144, but can also include associated information such as sensor status, the presence or absence of a surface guide path segment and, for example, error check codes in the form of check-sum digits or like computations. Again, the data signals indicative of the foregoing information are stored in memory.

Following the input of the various analog and digital data signals, the operational sequence MAINSQ will comprise sequence routines to perform various computations on the data signals and initiate various functional operations of the attendant vehicle 102 based on these computations. The operational sequence MAINSQ first checks various status flags to determine if the attendant vehicle 102 is in a "manual" mode or an "auto matic" mode. If in a manual mode, the operational sequence MAINSQ will transfer sequential control to a program routine specifically adapted for operation of the vehicle under manual control. The principles associated with the manual vehicle control of the attendant vehicle 102 have not been substantially described or depicted herein. If in a manual mode, circuitry associated with the previously-described operator interface 198 (shown in Figure 3) and the program routines in the control computer 170 will allow an operator to move and steer the attendant vehicle 102 through control components independent and separate from the various components of the vehicle 102 previously described herein. In this manner, the operator is provided the capability to move the attendant vehicle 102 to a maintenance area for servicing or, for example, to a particular location on the path layout 122 for automatic servicing. It should be noted that when the vehicle 102 is in the manual mode, input data signals received from the buried wire sensor arrangement 172 and surface guide path sensor arrangement 190 are not utilized for purposes of providing steering control signals. Instead, other circuitry and electro-mechanical components independent of a guidance system in accordance with the present invention can be utilized to detect when the vehicle 102 is within a predetermined range of a surface guide path or buried wire segment. Accordingly, the operator can move the vehicle 102 manually to a position adjacent a path segment, and the vehicle 102 can then be activated in an automatic mode for purposes of automatic guidance on the path layout 122.

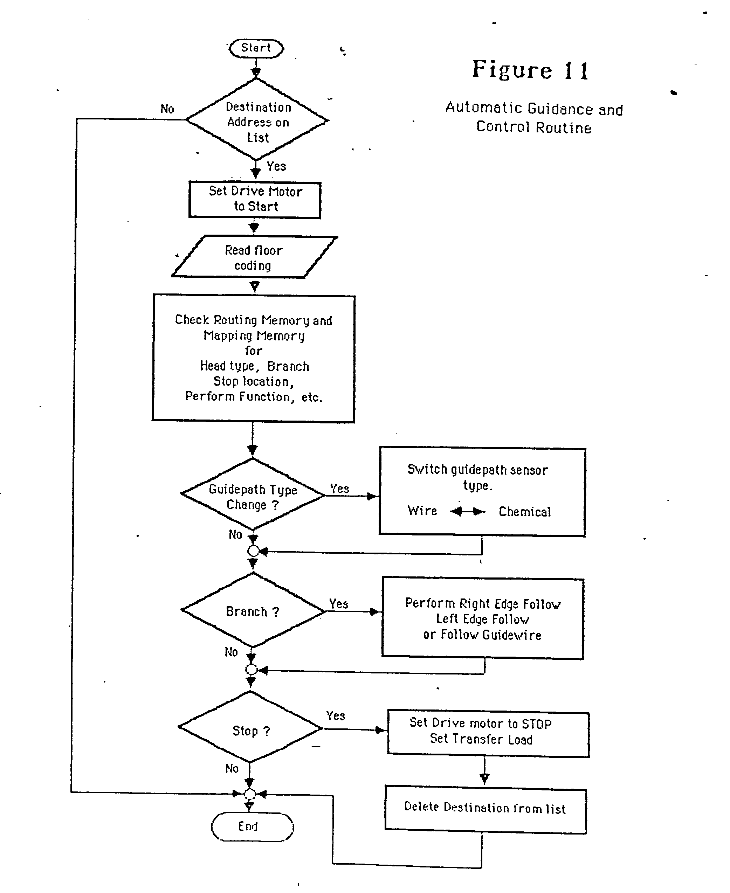

If the vehicle is in an "automatic" mode, operational control is transferred to an automatic guidance and control routine as shown in Figure 10. In this routine, various computations are performed on the data representative of the previously-received input data signals representative of information relating to the position of the vehicle 102 relative to either a surface guide path segment 144 or a buried wire path segment 130. Details of the automatic guidance and control routine are subsequently described herein with respect to the operational sequence shown in Figure 11.

Following execution of instruction sequences within the automatic guidance and control routine, program control is then returned to the MAINSQ operational sequence. Thereafter, operational control is transferred to a steering drive output routine. At the time of initiation of this routine, the automatic guidance and control routine has performed calculations which have resulted in data signals representative of the steering functions to be performed by the vehicle 102. Accordingly, within the steering drive output routine, data signals are applied to the steering motor drive unit 216 previously described with respect to Figure 3. Prior to application of these signals on transmission line 214 as shown in Figure 3, these data signals can be converted from digital to analog format. The data signals applied to the steering motor drive unit 216 will cause the steering motor to be driven in a direction so as to steer the vehicle 102 toward the particular path segment being followed. From a review of Figure 3, it is apparent that the guide path sensor arrangement 190, vehicle control microcomputer 170, steering motor drive unit 216 and steering reduction unit 226 thereby provide a servo loop for purposes of sensing a buried wire path segment or a surface guide path segment, and steering the attendant vehicle 102 in a direction so as to follow the segment. Information within the memories of the microcomputer 170 determine whether the vehicle 102 is to follow a buried wire path segment or a surface guide path segment. It should also be noted that if the attendant vehicle 102 is following a surface guide path segment, a further decision can be made as to whether the vehicle 102 is to follow the center line of the segment or, alternatively, is to follow a left or right edge of the segment. The concepts associated with edge following of the surface guide paths is described in detail in DeBruine U.S. Patent No. 4,307,791 issued December 29, 1981.

Following execution of the steering drive output routine, program control is then again transferred to the operational sequence MAINSQ. Sequence MAINSQ thereafter transfers program control to an operational sequence which can be characterized as a traction output routine. The traction output routine is similar in function to the steering drive output routine, and is utilized to apply appropriate data signals to the traction drive unit 232 on transmission line 230 as previously described with respect to Figure 3. Again, the actual signals applied on transmission line 230 will be in analog format, and the control microcomputer 170 can include circuitry to convert its internal digital signals to the appropriate analog signals. Although the traction drive unit 232 is similar to the steering motor drive unit 216, the traction motor 240 is generally much larger than the steering motor 234. Also, it is apparent that the "feedback" loop associated with the traction motor drive unit 232 and the vehicle control microcomputer 170 is sensing the "speed" of the vehicle 102, rather than vehicle position relative to a path segment.

With the use of the control microcomputer 170 for purposes of applying traction control signals to the traction drive unit 232, the speed of the attendant vehicle 102 can be controlled extremely precisely over various speed profiles. For example, when movement of the vehicle 102 is being initiated from a "stopped" state, the traction control signals applied on transmission line 230 can essentially "ramp up" the vehicle speed so as to provide a relatively smooth acceleration. Such acceleration is substantially important in the event the vehicle is carrying relatively fragile loads. Similarly, the vehicle can be smoothly decelerated when the vehicle is traveling along a curved path segment or is otherwise traveling in areas where people or other obstacles could be accidentally bumped. In this manner, it is apparent that the particular traction control signals which will be applied to the traction drive unit 232 will be at least partially dependent on the particular location of the vehicle 102 on the path layout 122. Furthermore, it is also apparent that the vehicle speed can be reduced in areas where it is necessary for the vehicle to precisely align with a load/unload station or other type of work station.

Following the performance of functional operations associated with the traction output routine, the program control is then transferred back to the operating sequence MAINSQ. The sequence MAINSQ then transfers program control to a sequence which can be characterized as the operator interface routine as shown in Figure 10. In this routine, interactive functional operations can be performed between the control microcomputer 170 and an operator through the bidirectional transfer of data signals between the control microcomputer 170 and the operator interface 198. For example, the operator interface 198 can include a keypad or similar device to allow an operator to activate numerical keys which, in turn, would provide representative data signals to the control microcomputer 170. The signals can include, for example, signals indicative of particular locations at which the attendant vehicle 102 is to stop, or other vehicle control information.

As an exemplary operation, the operator interface routine can perform translations from the values of data signals indicative of keys activated by the operator to a memory "pointer" which is directed to memory locations having information signals stored therein comprising a list of particular commands which the operator desires the vehicle to perform. An example of such a command list may include the following: go to work station 136; pick up a load at work station 136; move to work station 148; drop off, at work station 148, the load picked up at work station 136; and return to the location indicated by the location code 164.

In performing the foregoing functional operations, each command will be translated into a sequence of functions which must be performed by the vehicle 102. For example, the microcomputer 170 would have to determine, from information signals stored therein, the present location of the attendant vehicle 102 on the path layout 122, and the direction in which the vehicle 102 is positioned. Information relating to the position of the vehicle 102 on the path layout 122 can be provided, at least in part, by determining the "last" location code detected by the surface guide path sensor arrangement 190. In performance of these functions, the program sequences of the microcomputer 170 would employ a "map" of the path layout 122 stored in the memories of the microcomputer 170.

After determining present position, a sequence of computations would then be performed so as to determine the particular "route" which the vehicle is to travel along the path layout 122 so as to move to a requested destination. It is apparent that during movement of the vehicle 102, the program sequence would utilize the map of the path layout 122 each time a location code was detected by the surface guide path sensor arrangement 190. After detection of a location code, the program routine would perform computations to determine the next movement of the vehicle 102 so as to further move toward the requested destination. Again, it should be noted that the "map" of the path layout 122 would be programmed into the memory of the microcomputer 170 at the time the path layout 122 was installed and the vehicles made operable thereon. The information associated with the "map" of the path layout 122 would include, for example, all of the location codes found on the path layout, with information as to the particular interconnections of the location codes and the particular types of path segments between the location codes, i.e. buried wire segments or surface path segments.

From the map of the path layout 122, the program routines within the microcomputer 170 would determine whether the "next" path segment to be followed by the vehicle 102 is a surface path segment or a buried wire path segment. Accordingly, from this information the program sequences of the microcomputer 170 can determine whether the surface guide path sensor arrangement 190 or the buried wire sensor arrangement 172 is to next be utilized for path segment detection. It should also be noted that the map of the path layout 122 can include data indicating the "best" path to be followed by an attendant vehicle 102 to move from one location on the path layout 122 to another. The actual programming of the map of the path layout 122 and the particular data associated therewith will be relatively apparent to the skilled programmer having knowledge of the present invention.

In providing output information to the operator on transmission line 200 through the operator interface 198, such information may be in the form of data signals which are applied to a display screen or similar visual display device so as to provide various type of information to the operator. This display information would be updated by the transmission of data signals from the microcomputer 170 during movement of the vehicle. For example, this information can include current route position, a list of the remaining commands to be formed, internal vehicle status, and similar types of information.

Following the performance of functions associated with the operator interface routine, program control can be returned to the main operating sequence MAINSQ. The sequence MAINSQ can then transfer program control to instruction sequences which can be characterized as a communication routine for purposes of receiving and transmitting signals between the centralized system controller 206 and the vehicle communication circuit 204 as previously described with respect to Figures 3 and 5. This routine can provide, for example, various data signal conversions and error checking as required for reliable communications. The routine can also include exemplary functions specifically related to transmission media such as IR transmission. For example, the communication circuit 204 as previously described with respect to Figure 5 for IR communications can require that the communication routine provide data signals to the communication circuit 204 so as to "poll" or otherwise attempt to communicate with the centralized system controller 206 on a periodic basis, until the vehicle 102 is within a physical area wherein communications with the system controller 206 are possible. That is, although global communications are feasible with an IR transmission media, such transmission media are primarily utilized within a specific local area, or a local mode operation. Such local area communications are primarily sufficient, since the vehicles 102 can be provided with commands which cause the vehicles to return to a "home" position near the centralized system controller 206 for purposes of intercommunications between the system controller 206 and the communication circuits 204.

Following the performance of functions associated with the communication routine, program control can then be returned to the operating sequence MAINSQ. The sequence MAINSQ can then be repeated, with various analog and digital signals again received as input signals from the previously described external devices.

An exemplary sequence diagram for the automatic guidance and control routine briefly described with respect to Figure 10 is depicted in Figure 11. Execution of functions associated with the guidance and control routine are "triggered" by operator input of a specific functional operation for the vehicle to per form. As previously referenced, lists of operational commands can be generated and stored in memory of the microcomputer 170, with the commands removed from the list after performance. In this manner, an operator can enter a plurality of commands through the operator interface 198.

When the operator has initiated the operator guidance and control routine by activation of any suitable manual device, the guidance and control routine will obtain information signals indicative of the particular "destination" to which the vehicle 102 is to move. Data signals will then be transmitted by the control microcomputer 170 so as to initiate or continue movement of the vehicle 102. The present location of the vehicle 102 may be "known" to the microcomputer 170 by previously stored information or, alternatively, the vehicle 102 can determine its location after detection of a particular location code by the surface guide path sensor arrangement 190. After determination of the present location, program instruction sequences will be executed whereby the map of the path layout 122 will be processed to determine which of the surface guide path sensor arrangement 190 or buried wire sensor arrangement 172 is to be utilized for sensing the next path segment to be followed. If the map of the path layout 122 comprises information signals indicative of the requirement that the vehicle 102 must move from a surface guide path segment to a buried wire path segment. or vice versa, various functions must be performed. For example, if the vehicle 102 is to switch from a surface path segment to a buried wire path segment. the buried wire sensor arrangement 172 must first detect the existence of a buried wire path segment. After such detection, the instruction sequence within the microcomputer 170 can provide for generation of appropriate steering control and traction control signals so as to continue following the sensed path segment to which the vehicle 102 is to switch.

The automatic guidance and control routine will also utilize various information signals associated with the map of the path layout 122 to determine if the vehicle 102 is at a "branch" of the path layout 122. In such event, further information signals within the memories of the microcomputer 170 may cause the vehicle to initiate following of a left or right edge of a surface path segment for purposes of branching. Again, the principles associated with the edge following of surface guide paths are described in detail in the aforementioned DeBruine patent.

When the vehicle 102 has arrived at the desired destination, the location code on the floor surface at the desired destination will appropriately compare with the stored marker code information associated with the memory map of the path layout 122. If the appropriate destination is achieved, the microcomputer 170 will cause data signals to be applied to the traction motor drive unit 232 so as to cause the vehicle to stop. Dependent upon the particular functions desired by the operator, and the information signals stored in memory in accordance with the operator commands, load transfer may occur at the particular location at which the vehicle is stopped.

After transfer of the vehicle load, the present destination address can be deleted from the list, and program control returned to the main program sequence. The routine shown in Figure 11 is executed for each destination address.

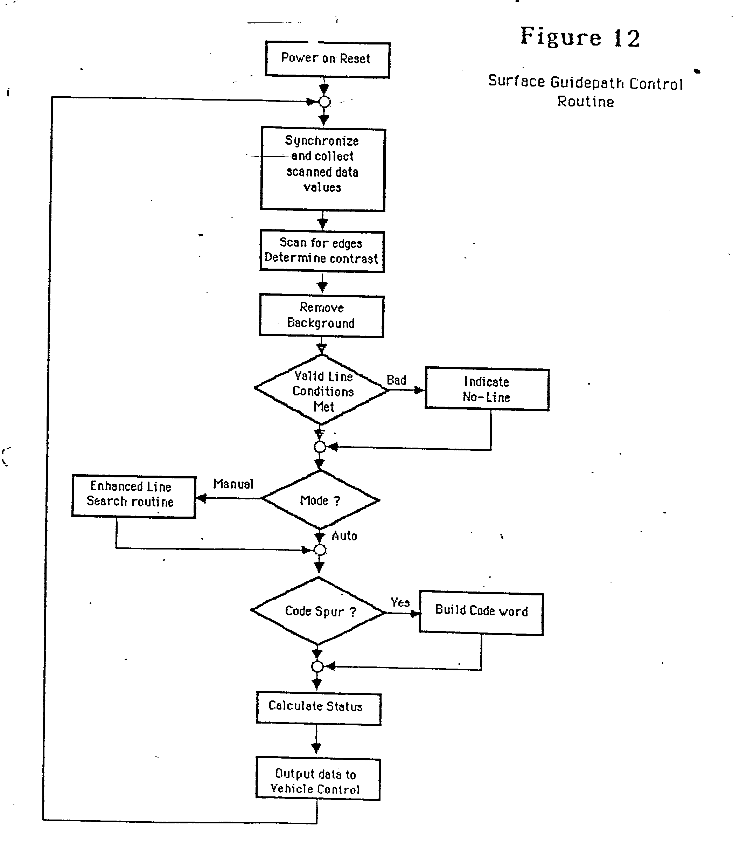

As previously described with respect to Figure 9, the surface guidepath sensor arrangement 190 includes a control microprocessor 332. An illustrative embodiment of an operating sequence which can be employed in the microprocessor 332 is shown in Figure 12. It should be emphasized that program instruction sequences in the microprocessor 332 are essentially independent of the program sequences associated with the microcomputer 170.

Referring specifically to Figure 12, the program sequence will be initiated upon activation of vehicle power. Referring to Figure 9, after initialization of the microprocessor sequence, data signals will be both transmitted and received on transmission line 330 so as to synchronize the scanning operation of the scanning mirror 314. In addition, data signals are received by the microprocessor 332 through transmission line 330 representative of the data "sense points" about the surface guidepath segment 144 on the floor surface 124. The information signals representative of these data points are then utilized by subsequent program sequence routines to determine line "characteristics" for purposes of guiding the vehicle 102 along the surface path segment 144, and for also determining if any code spurs have been detected.

Included in the microprocessor routine is a program sequence utilizing the information signals representative of the data points for determining the locations of path segment edges, assuming that a path segment has been detected. The edges of the surface path segment are determined by utilizing the magnitudes of the information signals representative of the data points to generate a relative "contrast" contour of the data points obtained during any one particular scan of the scanning mirror 314. As described in the aforementioned DeBruine patent, the portion of the information signals representative of background light can then be "removed", and a determination can be made as to the existence of a valid path segment. Various data flags can be set by the program sequence if a "no path" state is detected.

The program sequence can thereafter utilize various flags to determine if the vehicle 102 is in an automatic or a manual mode. If the vehicle is in a manual mode, and as previously described with respect to the program sequence of Figure 10, specialized program sequences can be utilized to "search" for the capturing of a vehicle path. As also previously described, this concept of manual control does not form the basis for any of the principal concepts of the invention.

If it has been determined that the vehicle is in an automatic mode, or if a path has been detected through the manual mode, the microprocessor sequence then determines if the information signals representative of the scanned data points are indicative of the existence of a code. If the code includes "spurs" as previously described with respect to Figure 2, individual spurs will be detected on separate scans of the scanning mirror 314. Accordingly, a coded "word" comprising a series of the code spurs will be determined through a series of scans and a series of passes through the microprocessor sequence shown in Figure 12. It should be noted that for purposes of determining the existence of a series of code spurs comprising a code word, the distance between detected spurs must be determined by the microprocessor sequence. That is, the sequence must have information relating to whether a code spur was detected during the previous scan of the surface guidepath segment by the scanning mirror 314, and the distance traveled by the vehicle since the previous scan. For this purpose, conventional distance measuring devices in the form of encoders or similar devices can be coupled to the drive wheel 244 previously described with respect to Figure 3.

Following the determination of the existence of code spurs and other types of codes, the present vehicle status can be determined and data signals can be applied over transmission line 334 through the interface circuit 336 to the vehicle control microcomputer 170. Program instruction control can then be reinitiated to repeat the microprocessor sequence shown in Figure 12.

As apparent to those skilled in the electrical communication arts, other operational sequences must be utilized in combination with the particular sequences described herein and depicted in Figures 10-12. However, such sequences are relatively well-known in the art or will be apparent to those skilled in the art having knowledge of the present invention. For example, conventional communication operational sequences can be utilized to format message signals for communications to the centralized system controller. In addition, various other operational sequences can be utilized to check the "integrity" of data signals received and transmitted by the microcomputer 170.

The principles of an integrated wire/surface guidance system are not limited to the specific guidance arrangements described herein. It will be apparent to those skilled in the art that modifications and other variations of the above-described illustrative embodiment of the invention may be effected without departing from the spirit and scope of the novel concepts of the invention.

## Claims

1. A guidance layout forming a predetermined path and adapted for use in a vehicle guidance system wherein at least one self-propelled vehicle is adapted to follow said guidance layout, the guidance layout comprising:
wire guidepath means located in a predetermined disposition relative to a floor surface for providing at least one segment of said guidance layout as a conductive path segment;
source means for generating electrical path signals and applying said signals to said wire guidepath means; and
surface guidepath means located in a predetermined disposition relative to said floor surface for providing at least one segment of said guidance layout capable of detection by said vehicle in the absence of electrical current passing through said surface guidepath means.

2. A guidance layout in accordance with claim 1 wherein said layout further comprises code means located proximate said floor surface and detectable by said vehicle for indicating the location of said vehicle along said guidance layout or for indicating particular functions to be performed by said vehicle.

3. A guidance layout in accordance with claim 1 or 2 characterized in that said layout further comprises central system controller means for selectively transmitting to said vehicle controller information signals representative of a sequence of functions to be performed by said vehicle.

4. A self-propelled vehicle adapted for use in a vehicle guidance system wherein said vehicle is adapted to follow a predetermined guidance layout, said vehicle comprising:
first sensing means for detecting electrical signals flowing through at least one first segment of said guidance layout, and for generating first signals representative of the position of said vehicle relative to said first segment;
vehicle control means connected to said first sensing means, and responsive to said first signals for generating first steering control signals;
steering control means connected to said vehicle control means, and responsive to said first steering control signals for steering said vehicle in a manner so as to guide said vehicle relative to said first segment;

second sensing means for detecting at least one second segment of said guidance layout by detecting electromagnetic signals emitted from said second segment, and for generating second signals representative of the position of said vehicle relative to said second segment;

said vehicle control means is connected to said second sensing means and responsive to said second signals for generating second steering control signals; and

said steering control means is further responsive to said second steering control signals so as to guide said vehicle as said vehicle moves along said second segment of said guidance layout.

5. A self-propelled vehicle in accordance with claim 4 characterized in that said vehicle further comprises:

operator interface means responsive to manual operation thereof for generating address destination signals representative of a guidance layout destination location to which said vehicle is to travel; and

said vehicle control means is responsive to said address destination signals for storing said address destination signals, for determining path segments of said layout from a present location of said vehicle to said destination location, and for generating steering and traction control signals so as to follow said path segments during travel to said destination location.

6. A self-propelled vehicle in accordance with claim 4 or 5 characterized in that said vehicle further comprises:

vehicle communication means responsive to externally-applied controller information signals representative of a sequence of functions to be performed by said vehicle, and for generating externally-applied vehicle communication signals representative of said controller information signals; and

said vehicle control means is responsive to said externally-applied vehicle communication signals for executing said sequence of functions.

7. A self-propelled vehicle in accordance with claim 6 characterized in that said vehicle control means comprises means for generating status communication signals representative of various status parameters associated with said vehicle; and

said vehicle communication means is responsive to said status communication signals for transmitting a set of internally-generated vehicle communication signals representative of said various vehicle status parameters.

8. A self-propelled vehicle in accordance with one of claims 4 to 7 characterized in that said first sensing means comprises:

sensor coil means mounted to said vehicle for sensing magnetic fields generated from said guidance layout, wherein sensor coil voltage signals are induced within said sensor coil means as a result of said magnetic fields; and

circuit means connected to said sensor coil means for comparing said sensor coil voltage signals and for generating said first signals in accordance with said comparison.

9. A self-propelled vehicle in accordance with anyone of claims 4 to 8 characterized in that said second sensing means comprises:

illumination means for generating electromagnetic light waves and applying said light waves to areas surrounding said second segment of said guidance layout;

scanning means for periodically scanning said guidance layout and for detecting electromagnetic light waves emitted from said guidance layout in response to illumination of said guidance layout by said illumination means; and

circuit means responsive to said visible electromagnetic light waves for converting said light waves into corresponding electrical signals and generating said second signals.

10. A self-propelled vehicle in accordance with anyone of claims 4 to 9 characterized in that said steering control means comprises traction control means connected to said vehicle control means, and responsive to traction control signals generated by said vehicle control means for selectively controlling the speed of said vehicle.

11. A self-propelled vehicle in accordance with anyone of claims 4 to 10 characterized in that said vehicle control means further comprises:

means for receiving destination address signals represenative of a destination location of said guidance layout to which said vehicle is travel, and for storing in memory said destination address signals:

means for receiving said first signals and said second signals: and

means responsive to said first and said second signals for generating said steering control signals so as to control traversal of said guidance layout and the speed of said vehicle.

12. A self-propelled vehicle in accordance with anyone of claims 4 to 11 characterized in that said vehicle control means further comprises:

means for storing information signals representative of a map of said guidance layout;

means for detecting the existence of said destination address signals:

means responsive to signals indicative of the present location of said vehicle to determine if travel of said vehicle to said destination location requires said vehicle to switch between following of said first segment of said guidance layout and following of said second segment of said guidance layout:

means for selectively applying signals to said first sensing means and to said second sensing means so as to selectively follow either said first segment or said second segment; and

means responsive to signals received from said second sensing means so as to determine when said vehicle has arrived at said destination location, and means responsive to said determi-

51 0 229 669 52

nation for applying signals to said steering control means so as to stop said vehicle.

13. A method for guiding at least one self-propelled vehicle along a guidance layout, said method comprising the steps of:

a. generating and applying electrical path signals to a wire guidepath located at a predetermined position relative to a floor surface;

b. detecting said electrical path signals when said vehicle is following said wire guidepath;

c. generating first signals representative of the position of said vehicle relative to said wire guidepath;

d. generating first steering control signals responsive to said first signals;

e. steering said vehicle in response to said first steering control signals in a manner so as to guide said vehicle along said wire guidepath;

f. sensing a surface guidepath of said guidance layout, and generating second signals representative of the position of said vehicle relative to said surface guidepath;

g. generating second steering control signals in response to said second signals;

h. guiding said vehicle along said surface guidepath in response to said second steering control signals as said vehicle moves along said surface guidepath;

i. generating potential path switching signals indicating said vehicle is approaching a potential switching location between said wire guidepath and said surface guidepath; and

j. selectively following either said surface guidepath or said wire guidepath in response to said potential path switching signals.

0229669

Automatic Guided Vehicle

Figure 1

Figure 2

0229669

Figure 3

Figure 4

Block Diagram
Infrared Communication Link

Figure 5

0229669

Figure 6

Block Diagram
Microprocessor

0229669

Block Diagram
Vehicle Control Microcomputer

Figure 7

**Figure 8**

Guide wire sensor

Band Pass Filter — 274
Analog to Digital Convertor — 290
Signal Detector — 294
Interface Buffer — 300
Vehicle Control System — 170

Data Bus
Address Bus
Control
Interrupt

Amp 270
Amp 270

Comp 286 288

Comp 296 298

Band Pass Filter — 274

C2 R3
R1
R2 C1
Amp 280
278

D1
D2 C3
278 Eref

F1
F2 FF

0229669

190

328

316
314
320
324
322 326
194
338
340
342
344
346
348
350

318
Amp
Bandpass Filter
Sample and Hold
Analog to Digital Convertor

372
356
358
Motor Drive
370
354
352

194
366
Clock
368

Lamp Inverter
Timing Chain
Microprocessor Interface

312
364
362
360
374

192
192

144
194
124

Floor

330

332

Scanning Sensor Head Control Microprocessor

334

336
Interface and Buffer Circuits

196

170
Vehicle Control Microcomputer

Figure 9

Surface Guidepath Sensor

**Figure 10**

Main Vehicle Software
Routine

Flowchart:

- Start (MAINSQ)
- Power on Reset Initialize
- Input Analog & Digital Signals
- Input Guidance Sensor Data and Status
- Mode ?
  - Auto → Automatic Guidance and Control Routine (Figure 11)
  - Manual → Manual Control Routine
- Steering Drive Output Routine
- Traction Output Routine
- Operator Interface Routine
- Communication Routine

**Figure 11**

Automatic Guidance and
Control Routine

```
                    ( Start )
                        │
                        ▼
            ╱───────────────────╲
    No     ╱     Destination      ╲
◄─────────     Address on          ──
           ╲       List           ╱
            ╲───────────────────╱
                        │ Yes
                        ▼
              ┌─────────────────┐
              │  Set Drive Motor │
              │    to Start      │
              └─────────────────┘
                        │
                        ▼
              ╱─────────────────╱
             ╱   Read floor    ╱
            ╱     coding      ╱
           ╱─────────────────╱
                        │
                        ▼
        ┌───────────────────────────┐
        │ Check Routing Memory and  │
        │   Mapping Memory          │
        │        for                │
        │  Head type,  Branch       │
        │  Stop location,           │
        │  Perform Function, etc.   │
        └───────────────────────────┘
                        │
                        ▼
              ╱───────────────╲              ┌─────────────────────────┐
             ╱  Guidepath Type ╲    Yes      │  Switch guidepath sensor │
                  Change ?        ──────────►│         type.            │
             ╲                   ╱            │                         │
              ╲───────────────╱              │  Wire ◄──► Chemical     │
                   │ No                       └─────────────────────────┘
                   ○◄──────────────────────────────────┘
                   ▼
              ╱───────────────╲              ┌─────────────────────────┐
             ╱                 ╲    Yes      │  Perform Right Edge Follow│
                 Branch ?        ──────────►│   Left Edge Follow       │
             ╲                 ╱            │  or Follow Guidewire     │
              ╲───────────────╱              └─────────────────────────┘
                   │ No                               │
                   ○◄──────────────────────────────────┘
                   ▼
              ╱───────────────╲     Yes      ┌─────────────────────────┐
                 Stop ?          ──────────►│  Set Drive motor to STOP │
             ╲                 ╱             │  Set Transfer Load       │
              ╲───────────────╱              └─────────────────────────┘
                   │ No                               │
                   ▼                                  ▼
                   ○◄──────────────          ┌─────────────────────────┐
                   │                         │ Delete Destination from list│
                ( End )                      └─────────────────────────┘
```

0229669

## Figure 12

Surface Guidepath Control
Routine